(19) Europäisches Patentamt
European Patent Office
Office européen des brevets

(11) **EP 3 534 203 B1**

(12) **EUROPEAN PATENT SPECIFICATION**

(45) Date of publication and mention of the grant of the patent:
**03.03.2021 Bulletin 2021/09**

(51) Int Cl.:
***G02C 13/00*** (2006.01)  ***G02C 7/06*** (2006.01)
***G02C 7/02*** (2006.01)

(21) Application number: **17864248.4**

(22) Date of filing: **31.10.2017**

(86) International application number:
**PCT/JP2017/039345**

(87) International publication number:
**WO 2018/079836 (03.05.2018 Gazette 2018/18)**

(54) **PROGRESSIVE POWER LENS PAIR, METHOD FOR DESIGNING PROGRESSIVE POWER LENS PAIR, AND METHOD FOR MANUFACTURING PROGRESSIVE POWER LENS PAIR**

GLEITSICHTLINSENPAAR, VERFAHREN ZUM ENTWURF EINES GLEITSICHTLINSENPAARS UND VERFAHREN ZUR HERSTELLUNG EINES GLEITSICHTLINSENPAARS

PAIRE DE VERRES À PUISSANCE PROGRESSIVE, PROCÉDÉ DE CONCEPTION D'UNE PAIRE DE VERRES À PUISSANCE PROGRESSIVE, ET PROCÉDÉ DE FABRICATION D'UNE PAIRE DE VERRES À PUISSANCE PROGRESSIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2016   JP 2016213629**

(43) Date of publication of application:
**04.09.2019 Bulletin 2019/36**

(73) Proprietor: **Nikon-Essilor Co., Ltd.**
**Tokyo 130-0026 (JP)**

(72) Inventors:
• **YANARI, Mitsuhiro**
**Tokyo 108-6290 (JP)**

• **UNO, Daisuke**
**Tokyo 108-6290 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 045 649      EP-A1- 2 224 276**
**EP-A1- 2 669 732      EP-A1- 2 937 728**
**WO-A1-2009/072528   WO-A1-2011/085936**
**WO-A1-2015/150432   JP-A- 2006 267 163**
**JP-A- 2010 096 852**

**Description**

TECHNICAL FIELD

The present invention relates to a progressive power lens pair, a method for designing a progressive power lens pair and a method for manufacturing a progressive power lens pair.

BACKGROUND ART

The difference between the angle of deviation in the left-eye lens and the angle of deviation in the right-eye lens, which is bound to occur when a prescription for, for instance, a progressive power lens for the left eye and a prescription for a progressive power lens for the right eye are different, may be minimized through slab-off processing as proposed in Japanese Laid Open Patent Publication No. 2012-215640, hereinafter PTL1. However, there are issues to be addressed with respect to slab-off processing in that the number of processing steps is likely to increase and that the optical performance may be compromised.

Each of EP2937728A1, EP2224276 A1, EP2669732A1, EP2045649A1, WO2011085936A1, JP2010096852A, WO2009072528A1, JP2006267163A, and WO2015150432A1 forms part of the state of the art relative to the present disclosure.

SUMMARY OF INVENTION

According to the 1st aspect of the present invention, there is provided a progressive power lens pair as recited in claim 1 below.

According to the 2nd aspect of the present invention, there is provided a computer-implemented method for designing a progressive power lens pair as recited in claim 11 below.

According to the 3rd aspect of the present invention, there is provided a method for manufacturing a progressive power lens pair as recited in claim 14 below.

The dependent claims are directed to particular embodiments of each respective aspect.

BRIEF DESCRIPTION OF DRAWINGS

[Fig. 1] Fig. 1(a) is a schematic illustration of the progressive power lens pair achieved in an embodiment and Fig. 1(b) is a schematic illustration of a progressive power lens [Fig. 2] A conceptual diagram in reference to which a corneal vertex distance is to be explained

[Fig. 3] A conceptual diagram in reference to which a sag quantity is to be explained [Fig. 4] A conceptual diagram indicating coordinate points taken on a progressive power lens pair

[Fig. 5] A conceptual diagram in reference to which an angle of inclination of a progressive power lens, measured along the up/down direction, is to be explained

[Fig. 6] Fig. 6(a) is an illustration indicating angles of deviation measured in a progressive power lens pair in the related art, and Fig. 6(b) is a conceptual diagram illustrating how angles of deviation are corrected for the progressive power lens pair in an embodiment

[Fig. 7] A diagram showing the configuration of a progressive power lens pair manufacturing system

[Fig. 8] A flowchart pertaining to a method for manufacturing a progressive power lens pair

[Fig. 9] Conceptual diagrams illustrating how the offset quantity in a line-of-sight manifested along the up/down direction may be detected

DESCRIPTION OF EMBODIMENT

The following is a description, given in reference to drawings as needed, of the progressive power lens pair, the method for designing a progressive power lens pair, the method for manufacturing a progressive power lens pair and the like, achieved in an embodiment. In the description of the embodiment, values indicating the spherical power, the astigmatic power and the astigmatism axis angle for a left-eye lens will be respectively represented by SL, CL and AxL, whereas values indicating the spherical power, astigmatic power and the astigmatism axis angle for a right-eye lens will be respectively represented by SR, CR and AxR.

Unless specifically noted, levels of refractive power will be indicated in units of diopters (D) in the following description. In addition, terms such as "upper part" and "lower part" used in relation to a progressive power lens in the following description refer to positions of portions of the progressive power lens, having been processed to be used as an eyeglass lens, as it is oriented when worn. It is desirable that the up/down direction be in alignment with the vertical direction. In the drawings, the positional relationship between the upper part and the lower part of a lens matches the positional relationship between an upper side and a lower side of the drawing sheets.

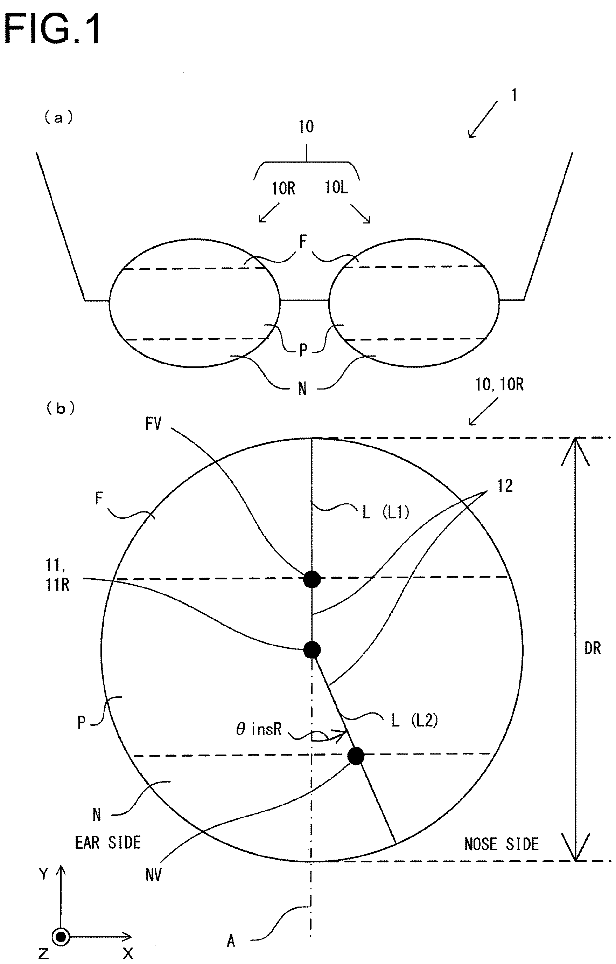

Fig. 1(a) schematically illustrates an example of a progressive power lens pair 1 achieved in the embodiment. The progressive power lens pair 1 includes two progressive power lenses 10, i.e., a left-eye lens 10L and a right-eye lens 10R. The progressive power lenses 10 each include a distance zone F, suitable for distance vision, a near zone N achieving refractive power suited for near vision and located at a position different from that of the distance zone F, and a progressive zone P located between the distance zone and the near zone where the refractive power changes continuously.

It is to be noted that no particular restrictions are imposed with respect to a suitable viewing distance for the distance zone F, as long as it is, on the whole, greater than the viewing distance suitable for the near zone N.

The structure of a progressive power lens 10 will be explained in reference to Fig. 1(b), which shows a progressive power lens 10R for the right eye. Unless specifically stated, the embodiment will be described in reference to coordinate axes set as shown in the figure for the lenses for both eyes, with a Y axis extending along the up/down direction running through the top and the bottom of each progressive power lens 10, an X axis running from the side where the ear is located toward the nose and a Z axis extending parallel to the optical axis of the progressive power lens 10. In Fig. 1(b), the progressive power lens 10 represents the shape of a right-eye lens 10R. The progressive power lens 10 in Fig. 1(b) is in a preprocessing state (a state before it undergoes a lens grinding process), i.e., the state before the lens is processed to match the shape of the eyeglass frame, and assumes a circular shape in a plan view. The upper side and the lower side of the progressive power lens 10 in the figure will be respectively set on the upper side and on the lower side of the wearer's face when it is worn. The progressive power lens 10 includes the distance zone F, the near zone N and a intermediate region P.

The distance zone F, located over an upper area of the progressive power lens 10, becomes a region where the refractive power optimized for distance vision is achieved once the progressive power lens 10 is processed into an eyeglass lens. The near zone N, located over a lower area of the progressive power lens 10, becomes a region where the refractive power optimized for near vision is achieved once the progressive power lens 10 is processed into the eyeglass lens. The progressive zone P, located between the distance zone F and the near zone N of the progressive power lens 10, becomes a region where the distance zone F and the near zone N are connected as the refractive power changes continuously and smoothly between them.

The refractive power lens 10 includes a plurality of reference points. Such reference points may be, for instance, an optical center 11 (or an optical center 11R for the right-eye lens), a far reference point FV and a near reference point NV, as indicated in Fig. 1(b). The optical center 11 is a reference point designated as a center for design work. The far reference point FV is a measurement reference point at which the distance vision power of the lens is measured. The near reference point NV is used as a measurement reference point at which the near vision power of the lens in the near zone N is measured.

In the description of the embodiment, the value obtained by subtracting a surface average refractive power at the far reference point FV from a surface average refractive power at the near reference point NV, measured at each of the two surfaces, i.e., an object-side surface and an eyeball-side surface, of the progressive power lens 10, will be referred to as a "surface additional power". An additional power specified with a prescription value will be referred to as a "prescribed additional power" and a value obtained by subtracting an average refractive power of transmitted light passing through the far reference point FV from an average refractive power of transmitted light passing through the near reference point NV of the lens will be referred to as "wear additional power".

An outer diameter DR of the right-eye lens 10R prior to the lens grinding process is equivalent to the diameter of the right-eye lens 10R formed in a circular shape. Likewise, an outer diameter DL of the left-eye lens 10L prior to the lens grinding process (not shown) is equivalent to the diameter of the left-eye lens 10L formed in a circular shape.

Fig. 1(b) shows a design reference line L for the right-eye lens 10R set on the right-eye lens 10R. The design reference line L includes a line segment L1 extending from the upper end of the right-eye lens 10R through the far reference point FV to the optical center 11R and a line segment L2 extending from the optical center 11 through the near reference point NV. An inset angle θinsR is defined as the angle formed by the axis A passing through the optical center 11 and extending along the up/down direction and the line segment L2. Likewise, an inset angle θinsL of the left-eye lens 10L is defined as the angle formed by an axis A passing through the optical center 11 and extending along the up/down direction and the line segment L2.

The progressive power lens pair 1 in the embodiment is a progressive power lens pair 1 intended for a wearer with a prescription indicating a prescribed additional power for the right-eye lens 10R and a prescribed additional power for the left-eye lens 10L, which are equal to each other. In addition, in the progressive power lens pair 1, a difference ADDR1 - ADDR2 obtained by subtracting a surface additional power ADDR2 at the eyeball-side surface from a surface additional power ADDR1 at the object-side surface of the right-eye lens 10R takes a value different from the value calculated as a difference ADDL1 - ADDL2 obtained by subtracting a surface additional power ADDL2 at the eyeball-side surface from a surface additional power ADDL1 at the object-side surface of the left-eye lens 10L.

In the following description of the embodiment, setting the surface additional power at the object-side surface and the surface additional power at the eyeball-side surface of a given lens so as to achieve a prescribed additional power will be referred to as "addition allocation". In addition, the difference obtained by subtracting the surface additional power at the eyeball-side surface from the surface additional power at the object-side surface will be referred to as an "allocation parameter".

By allocating the surface additional powers for the left-eye lens 10L differently from the surface additional powers allocated for the right-eye lens 10R as described above, a greater level of design freedom is afforded in comparison to the degree of freedom afforded when designing a lens pair with surface additional powers that are balanced equally for the left-eye lens 10L and the right-eye lens 10R. This means that optical characteristics such as aberration can be more optimally set, and in particular, the angle of deviation of a progressive power lens 10, measured along the up/down direction or the like, can be adjusted in an optimal manner.

It is to be noted that while additional powers are allocated for the left-eye progressive power lens 10 and for the right-eye progressive power lens 10 by taking different values for the difference between the object-side surface additional power and the eyeball-side surface additional power for the left-eye progressive power lens 10 and between the object-side surface additional power and the eyeball-side surface additional power for the right-eye progressive power lens 10 in the example described above, addition allocation may be achieved by taking different values for the ratio of the object-side surface additional power and the eyeball-side surface additional power for one lens and the ratio of the object-side surface additional power and the eyeball-side surface additional power for the other lens. No particular restrictions are imposed with respect to an allocation parameter used as a criterion, as long as the additional powers are allocated differently for the left lens and the right lens.

In the progressive lens pair 1, different addition allocations can be achieved for the left-eye lens 10L and for the right-eye lens 10R when the prescribed additional power for the right-eye lens 10R and the prescribed additional power for the left-eye lens 10L are equal to each other and different prescription values are indicated for the left-eye lens 10L and the right-eye lens 10R with respect to a parameter other than the prescribed additional powers.

In the progressive power lens pair 1, different values can be taken for the allocation parameter ADDR1 - ADDR2 for the right-eye lens 10R and the allocation parameter ADDL1 - ADDL2 for the left-eye lens when the prescribed additional power for the right-eye lens 10R and the prescribed additional power for the left-eye lens 10L are equal to each other and the spherical power SR for the right-eye lens 10R and the spherical power SL for the left-eye lens 10L are different from each other. Accordingly, the difference between the optical characteristics of the left-eye lens and the optical characteristics of the right-eye lens, and in particular the difference between the angle of deviation at the two lenses, attributable to a difference between the spherical powers, can be corrected in a desirable manner.

In the progressive lens pair 1, different values can be taken for the allocation parameter ADDR1 - ADDR2 for the right-eye lens 10R and the allocation parameter ADDL1 - ADDL2 for the left-eye lens when the prescribed additional power for the right-eye lens 10R and the prescribed additional power for the left-eye lens 10L are equal to each other and a astigmatic power CR for the right-eye lens 10R and the astigmatic power CL for the left-eye lens 10L are different from each other. Accordingly, the difference between the optical characteristics of the left-eye lens and the optical characteristics of the right-eye lens, and in particular the difference between the angles of deviation at the two lenses, attributable to a difference between the astigmatic powers, can be corrected in a desirable manner.

In addition, it is desirable that conditions expressed as;

$$\text{when } SL < SR, \ ADDR1 < ADDL1$$

$$\text{when } SR < SL, \ ADDL1 < ADDR1$$

be satisfied with respect to the spherical power SR of the right-eye lens 10R and the spherical power SL of the left-eye lens 10L. Accordingly, the difference between the optical characteristics of the left-eye lens and the right-eye lens, and more specifically, the difference between the angle of deviation (may be otherwise referred to as prismatic power) corresponding to the left-eye lens and the angle of deviation corresponding to the right-eye lens, attributable to a difference in the spherical powers, can be even more effectively corrected.

In the progressive lens pair 1, different values can be taken for the allocation parameter ADDR1 - ADDR2 for the right-eye lens 10R and the allocation parameter ADDL1 - ADDL2 for the left-eye lens 10L when the prescribed additional power for the right-eye lens 10R and the prescribed additional power for the left-eye lens 10L are equal to each other and a spherical equivalent SR + CR/2 for the right-eye lens 10R and a spherical equivalent SL + CL/2 for the left-eye lens 10L are different from each other. Accordingly, the difference between the optical characteristics of the left-eye lens and the optical characteristics of the right-eye lens, and in particular the difference between the angle of deviation at the left-eye lens and the angle of deviation at the right-eye lens, attributable to a difference between the spherical equivalents, can be corrected in a desirable manner.

In addition, it is desirable that conditions expressed as;

$$\text{when } SL + CL/2 < SR + CR/2, \text{ADDR1} < \text{ADDL1}$$

$$\text{when } SR + CR/2 < SL + CL/2, \text{ADDL1} < \text{ADDR1}$$

be satisfied with respect to the spherical equivalent SR + CR/2 for the right-eye lens 10R and the spherical equivalent SL + CL/2 for the left-eye lens 10L. Accordingly, the difference between the optical characteristics of the left-eye lens and the right-eye lens, and more specifically, the difference between the angle of deviation corresponding to the left-eye lens and the angle of deviation corresponding to the right-eye lens attributable to a difference between the spherical equivalents can be even more effectively corrected.

In the progressive lens pair 1, different values can be taken for the allocation parameter ADDR1 - ADDR2 for the right-eye lens 10R and the allocation parameter ADDL1 - ADDL2 for the left-eye lens when the prescribed additional power for the right-eye lens 10R and the prescribed additional power for the left-eye lens 10L are equal to each other and an astigmatism axis angle AxR corresponding to the right-eye lens 10R and an astigmatism axis angle AxL corresponding to the left-eye lens 10L are different from each other. Accordingly, the difference between the optical characteristics of the left-eye lens and the optical characteristics of the right-eye lens, and in particular the difference between the angle of deviation at the left-eye lens and the angle of deviation at the right-eye lens, attributable to the difference between the astigmatism axis angles, can be corrected in a desirable manner.

In the progressive lens pair 1, different values can be taken for the allocation parameter ADDR1 - ADDR2 for the right-eye lens 10R and the allocation parameter ADDL1 - ADDL2 for the left-eye lens 10L when the prescribed additional power for the right-eye lens 10R and the prescribed additional power for the left-eye lens 10L are equal to each other and the outer diameter DR of the right-eye lens 10R and the outer diameter DL of the left-eye lens 10L are different from each other. Accordingly, the difference between the optical characteristics of the left-eye lens and the optical characteristics of the right-eye lens, and in particular, the difference between the angle of deviation at the right-eye lens and the angle of deviation at the left-eye lens, attributable to a difference in the outer diameters prior to the lens grinding process, can be corrected in a desirable manner.

In the progressive lens pair 1, different values can be taken for the allocation parameter ADDR1 - ADDR2 for the right-eye lens 10R and the allocation parameter ADDL1 - ADDL2 for the left-eye lens 10L when that prescribed additional power for the right-eye lens 10R and the prescribed additional power for the left-eye lens 10L are equal to each other and the inset angle $\theta$insR of the right-eye lens 10R and an inset angle $\theta$insL of the left-eye lens 10L are different from each other. Accordingly, the difference between the optical characteristics of the left-eye lens and the optical characteristics of the right-eye lens, and in particular the difference between the angle of deviation at the left-eye lens and the angle of deviation at the right-eye lens, attributable to a difference between the inset angles, can be corrected in a desirable manner.

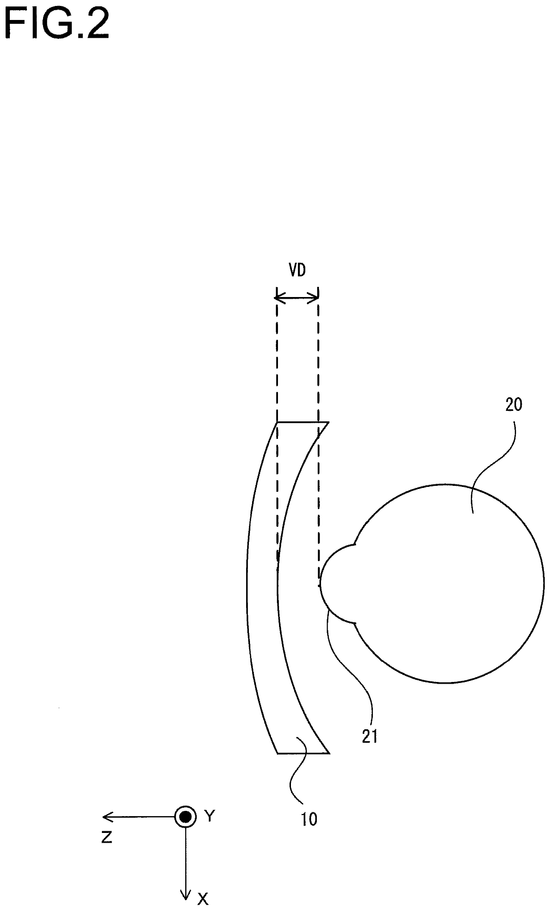

Fig. 2 is an illustration of a corneal vertex distance VD. A progressive power lens 10 is positioned to the front of a cornea 21 of an eyeball 20. The corneal vertex distance VD is defined as a distance VD between the corneal vertex and the eyeball-side surface of the progressive power lens 10. In the following description of the embodiment, the corneal vertex distance for the right-eye lens 10R will be notated as VDR and the corneal vertex distance for the left-eye lens 10L will be notated as VDL.

In the progressive lens pair 1, different values can be taken for the allocation parameter ADDR1 - ADDR2 for the right-eye lens 10R and the allocation parameter ADDL1 - ADDL2 for the left-eye lens 10L when the prescribed additional power for the right-eye lens 10R and the prescribed additional power for the left-eye lens 10L are equal to each other and the corneal vertex distance VDR corresponding to the right-eye lens 10R and the corneal vertex distance VDL corresponding to the left-eye lens 10L are different from each other. Accordingly, the difference between the optical characteristics of the left-eye lens and the optical characteristics of the right-eye lens, and in particular the difference between the angle of deviation at the left-eye lens and the angle of deviation at the right-eye lens, attributable to a difference between the corneal vertex distances VD, can be corrected in a desirable manner.

In addition, for the progressive power lens 1, it is desirable that conditions expressed as;

$$\text{when } SVL < SVR, ADDR1 < ADDL1$$

$$\text{when } SVR < SVL, ADDL1 < ADDR1$$

be satisfied with respect to an index SVR defined by

$$SVR == SR + CR \times (\sin(AxR))^2$$

for the refractive power achieved along the up/down direction at the right-eye lens 10R and an index SVL defined by

$$SVL = SL + CL \times (\sin(AxL))^2$$

of the refractive power achieved along the up/down direction at the left-eye lens 10L. Accordingly, the difference between the optical characteristics of the left-eye lens and the right-eye lens, and in particular, the difference between the angle of deviation at the left-eye lens and angle of deviation at the right-eye lens, attributable to a difference between the refractive powers achieved along the up/down direction at the eyeglasses, can be corrected effectively.

It is desirable that the addition allocation for the right-eye lens 10R and the addition allocation for the left-eye lens 10L in the progressive lens pair 1, expressed in units of diopters, be different from each other so as to satisfy a condition expressed as;

$$0 < | (ADDR1 - ADDR2) - (ADDL1 - ADDL2) | \leq 4 \ldots (1)$$

Since the difference between the addition allocation for the left-eye lens and the addition allocation for the right-eye lens cannot take a large value under this condition, the appearance of the progressive power lens pair 1 is not compromised and the wearer is able to adapt to the progressive power lenses 10 smoothly. In addition, from this perspective, it is more desirable that the parameter value at the right end in conditional expression (1) above take a value equal to or less than 3 and it is even more desirable that it take a value equal to or less than 2.

It is desirable that the progressive power lens pair 1 satisfy a condition expressed as;

$$0 < | (ADDR1 - ADDR2) - (ADDL1 - ADDL2) | / | SR - SL | \leq 16 \ldots (2)$$

when the spherical power SR at the right-eye lens 10R and the spherical power SL at the left-eye lens 10L are different from each other. Accordingly, it can be ensured that the appearance of the progressive power lens pair 1 is not compromised and that the wearer can adapt to the progressive power lenses 10 with ease while, at the same time, taking into consideration a change in the addition allocation difference that can be tolerated in correspondence to the extent of difference between the left lens spherical power and the right lens spherical power. In addition, from this perspective, it is more desirable that the parameter value at the right end in conditional expression (2) above take a value equal to or less than 12 and it is even more desirable that it take a value equal to or less than 8.

It is desirable that the progressive power lens pair 1 satisfy a condition expressed as;

$$0 < | (ADDR1 - ADDR2) - (ADDL1 - ADDL2) | / | (SR + CR/2) - (SL + CL/2) | \leq 32 \ldots$$

$$(3)$$

when the spherical equivalent SR + CR/2 for the right-eye lens 10R and the spherical equivalent SL + CL/2 for the left-eye lens 10L are different from each other. Accordingly, it can be ensured that the appearance of the progressive power lens pair 1 is not compromised and that the wearer can adapt to the progressive power lenses 10 with ease while, at the same time, taking into consideration a change in the addition allocation difference that can be tolerated in correspondence to the extent of difference between the left lens spherical equivalent and the right lens spherical equivalent. In addition, from this perspective, it is more desirable that the parameter value at the right end in conditional expression (3) above take a value equal to or less than 24 and it is even more desirable that it take a value equal to or less than 16.

The progressive power lens pair 1 satisfies a condition expressed as;

$$0 < | (ADDR1 - ADDR2) - (ADDL1 - ADDL2) | / | (SVR - SVL) | \leq 16 \ldots (4)$$

when SVR and SVL are different from each other. Accordingly, it can be ensured that the appearance of the progressive power lens pair 1 is not compromised and that the wearer can adapt to the progressive power lenses 10 with ease while, at the same time, taking into consideration a change in the addition allocation difference that can be tolerated in correspondence to the difference between the refractive power achieved along the up/down direction at the left-eye progressive power lens 10 and the refractive power achieved along the up/down directions at the right-eye progressive power lens 10. In addition, from this perspective, it is more desirable that the parameter value at the right end in conditional expression (4) above take a value equal to or less than 12 and it is even more desirable that it take a value equal to or less than 8.

The progressive power lens pair 1 can be designed by adjusting the addition allocation for the left-eye lens 10L and the addition allocation for the right lens 10R so as to set them different from each other in conjunction with a lens estimated to have a significant sag quantity measured along the optical axis during the design stage.

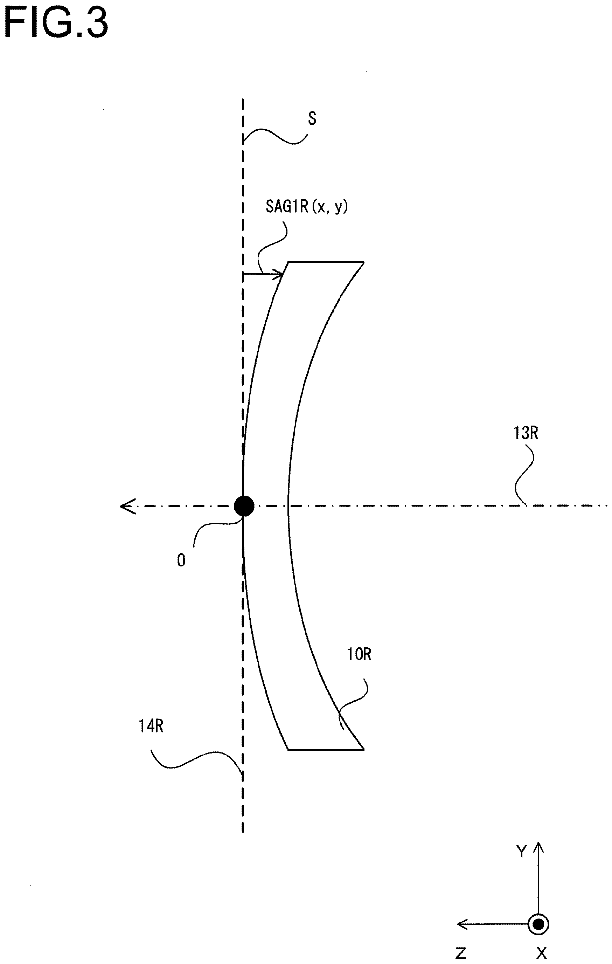

Fig. 3 is an illustration in reference to which sag quantity will be explained. The object-side vertex of the right-eye lens 10R is designated as a point O. The object-side vertex is an intersecting point at which the optical axis passing through the optical center of the lens and the object-side surface of the lens intersect each other. An XY coordinate system is set over a plane S ranging perpendicular to an optical axis 13R at the object-side surface so as to pass through the point O, and the distance from each point (x, y) at the plane S to the object-side surface measured along the direction in which the optical axis extends, is designated as a sag quantity SAG1R(x, y). A sag quantity SAG1L(x, y) is likewise defined for the left-eye lens 10L.

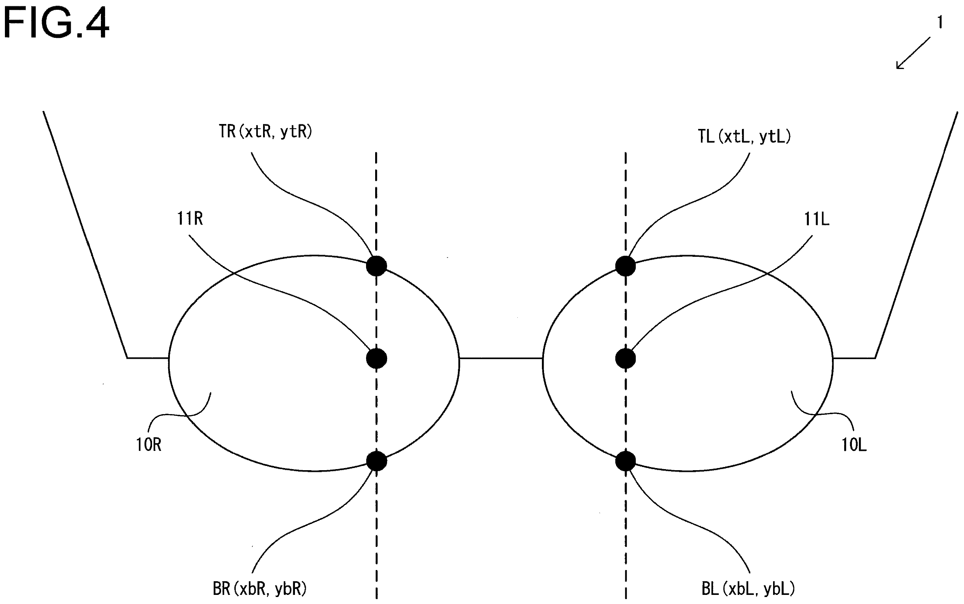

Fig. 4 shows coordinate points taken in the progressive power lens pair 1. Among intersecting points at which a straight line drawn along the up/down direction so as to pass through the optical center 11R of the right-eye lens 10R and the frame intersect each other, a point located on the upper side relative to the optical center is notated as TR(xtR, ytR) and a point on the lower side relative to the optical center is notated as BR(xbR, ybR). Among intersecting points at which a straight line drawn along the up/down direction so as to pass through the optical center 11L of the left-eye lens 10L and the frame intersect each other, a point located on the upper side relative to the optical center is notated as TL(xtL, ytL) and a point on the lower side relative to the optical center is notated as BL(xbL, ybL).

The progressive power lens pair 1 satisfies a condition expressed in units of diopters as;

$$0 < | (ADDR1 - ADDR2) - (ADDL1 - ADDL2) | \leq 4 \ldots (1)$$

when a condition expressed in units of millimeters as;

$$0 \leq | (SAG1R(xtR, ytR) - SAG1R(xbR, ybR)) - (SAG1L(xtL, ytL) - (SAG1L(xbL, ybL)) | \leq 4 \ldots (5)$$

is satisfied, with SAG1R(x, y) indicating a sag quantity measured along the optical axis in relation to the right-eye lens 10R at a coordinate point (x, y) taken on a plane passing through the object-side vertex of the right-eye lens 10R and ranging perpendicular to the optical axis of the right-eye lens 10R, with SAG1L(x, y) indicating the sag quantity measured along the optical axis in relation to the left-eye lens 10L at a coordinate point (x, y) taken on a plane passing through the object-side vertex of the left-eye lens 10L and ranging perpendicular to the optical axis of the left-eye lens 10L, with (xtR, ytR) and (xbR, ybR) respectively indicating a coordinate point at which a straight line passing through the position taken by the optical axis of the right-eye lens 10R fitted inside a frame and extending along the up/down direction intersects the top end of the frame and a coordinate point at which the straight line intersects the bottom end of the frame and with (xtL, ytL) and (xbL, ybL) respectively indicating a coordinate point at which a straight line passing through the position taken by the optical axis of the left-eye lens 10L fitted inside a frame and extending along the up/down direction intersects the top end of the frame, and a coordinate point at which the straight line intersects the bottom end of the frame. Accordingly, any difference between the optical characteristics of the left-eye lens and the optical characteristics of the right-eye lens, and in particular, the difference between the angle of deviation corresponding to the left-eye lens and the angle of deviation corresponding to the right-eye lens, attributable to an offset in the optical axis inclination or a discrepancy in the difference between the sag quantities measured at the top end and the bottom end of the left-eye lens frame and the difference between the sag quantities measured at the top end and the bottom end of the right-eye lens frame, relative to each other, can be effectively corrected.

The progressive power lens pair 1 satisfies a condition expressed in units of diopters as;

$$0 < | (ADDR1 - ADDR2) - (ADDL1 - ADDL2) | \leq 4 \ldots (1)$$

when a condition expressed in units of millimeters as;

$$0 \leq | \{SAG1R(xbR, ybR) - SAG1L(xbL, ybL) | \leq 4 \ldots (6)$$

is satisfied, with SAG1R(x, y) indicating the sag quantity measured along the optical axis in relation to the right-eye lens 10R at a coordinate point (x, y) taken on a plane passing through the object-side vertex of the right-eye lens 10R and ranging perpendicular to the optical axis of the right-eye lens 10R, with SAG1L(x, y) indicating the sag quantity measured along the optical axis in relation to the left-eye lens 10L at a coordinate point (x, y) taken on a plane passing through the object-side vertex of the left-eye lens 10L and ranging perpendicular to the optical axis of the left-eye lens 10L, with (xtR, ytR) and (xbR, ybR) respectively indicating a coordinate point at which a straight line passing through the position taken by the optical axis of the right-eye lens 10R fitted inside a frame and extending along the up/down direction intersects the top end of the frame and coordinate point at which the straight line intersects the bottom end of the frame, and with (xtL, ytL) and (xbL, ybL) respectively indicating a coordinate point at which a straight line passing through the position taken by the optical axis of the left-eye lens 10L fitted inside a frame and extending along the up/down direction intersects the top end of the frame and a coordinate point at which the straight line intersects the bottom end of the frame. Accordingly, any difference between the optical characteristics of the left-eye lens and the optical characteristics of the right-eye lens, and in particular, a difference between the angle of deviation corresponding to the left-eye lens and the angle of deviation corresponding to the right-eye lens, attributable to an offset in the optical axis inclination or a difference between the sag quantities measured at the bottom end of the left-eye lens frame and the right-eye lens frame, can be effectively corrected.

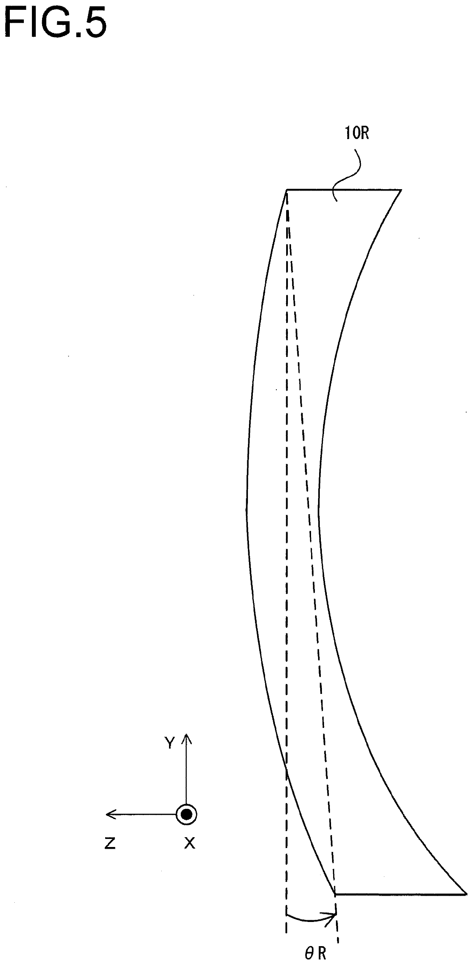

Fig. 5 is an illustration in reference to which an angle of inclination θR at the right-eye lens 10R is to be explained. The angle of inclination θR is defined as the angle formed by a straight line connecting the upper end and the lower end of the right-eye lens 10R at the object-side surface and a plane ranging perpendicular to the optical axis. Likewise, an angle of inclination θL at the left-eye lens 10L is defined as the angle formed by a straight line connecting the upper end and the lower end of the left-eye lens 10L at the object-side surface and a plane ranging perpendicular to the optical axis.

The progressive power lens pair 1 satisfies a condition expressed in units of diopters as;

$$0 < | (ADDR1 - ADDR2) - (ADDL1 - ADDL2) | \leq 4 \ldots (1)$$

when a condition expressed in units of degrees as;

$$0 \leq | \theta R - \theta L | \leq 5 \ldots (7)$$

is satisfied, with SAG1R(x, y) indicating the sag quantity measured along the optical axis in relation to the right-eye lens 10R at a coordinate point (x, y) taken on a plane passing through the object-side vertex of the right-eye lens 10R and ranging perpendicular to the optical axis of the right-eye lens 10R, with SAG1L(x, y) indicating the sag quantity measured along the optical axis in relation to the left-eye lens 10L at a coordinate point (x, y) taken on a plane passing through the object-side vertex of the left-eye lens 10L and ranging perpendicular to the optical axis of the left-eye lens 10L, with (xtR, ytR) and (xbR, ybR) respectively indicating a coordinate point at which a straight line passing through the position taken by the optical axis of the right-eye lens 10R fitted inside a frame and extending along the up/down direction intersects the top end of the frame and a coordinate point at which the straight line intersects the bottom end of the frame, with (xtL, ytL) and (xbL, ybL) respectively indicating a coordinate point at which a straight line passing through the position taken by the optical axis of the left-eye lens 10L, fitted inside a frame and extending along the up/down direction intersects the top end of the frame and a coordinate point at which the straight line intersects the bottom end of the frame and with the angle θR and the angle θL calculated as:

$$\theta R = atan((SAG1R(xtR, ytR) - SAG1R(xbR, ybR)) / (ytR - ybR))$$

$$\theta L = atan((SAG1L(xtL, ytL) - SAG1L(xbL, ybL)) / (ytL - ybL)).$$

Accordingly, any difference between the optical characteristics of the left-eye lens and the optical characteristics of the right-eye lens, and in particular, a difference between the angle of deviation corresponding to the left-eye lens and the angle of deviation corresponding to the right-eye lens, attributable to an offset in the optical axis inclination or a difference between the inclinations measured along the up/down direction at the left-eye lens frame and at the right-eye lens frame, can be effectively corrected.

The progressive power lens pair 1 satisfies a condition expressed in units of diopters as;

$$0 < | (ADDR1 - ADDR2) - (ADDL1 - ADDL2) | \leq 4 \ldots (1)$$

when a condition expressed in units of millimeters as;

$$0 \leq | (SAG1R(x, y) - SAG1L(x', y')) | \leq 4 \ldots (8)$$

is satisfied on the frame perimeter with respect to a sag quantity SAG1R(x, y) for the right-eye lens 10R and a sag quantity SAG1L(x', y') for the left-eye lens 10L with SAG1R(x, y) indicating the sag quantity measured along the optical axis in relation to the right-eye lens 10R at a coordinate point (x, y) taken on a plane passing through the object-side vertex of the right-eye lens 10R and ranging perpendicular to the optical axis of the right-eye lens 10R, with SAG1L(x, y) indicating the sag quantity measured along the optical axis in relation to the left-eye lens 10L at a coordinate point (x, y) taken on a plane passing through the object-side vertex of the left-eye lens 10L and ranging perpendicular to the optical axis of the left-eye lens 10L, and with (x', y') indicating a coordinate point taken at a position on the left-eye frame, which achieves symmetry to the coordinate point (x, y) at the right-eye frame. Accordingly, any difference between the optical characteristics of the left-eye lens and the optical characteristics of the right-eye lens, and in particular, a difference between the angle of deviation corresponding to the left-eye lens and the angle of deviation corresponding to the right-eye lens, attributable to an offset in the optical axis inclination or a difference between the sag quantities measured on the left-eye lens frame and the right-eye lens frame, can be effectively corrected.

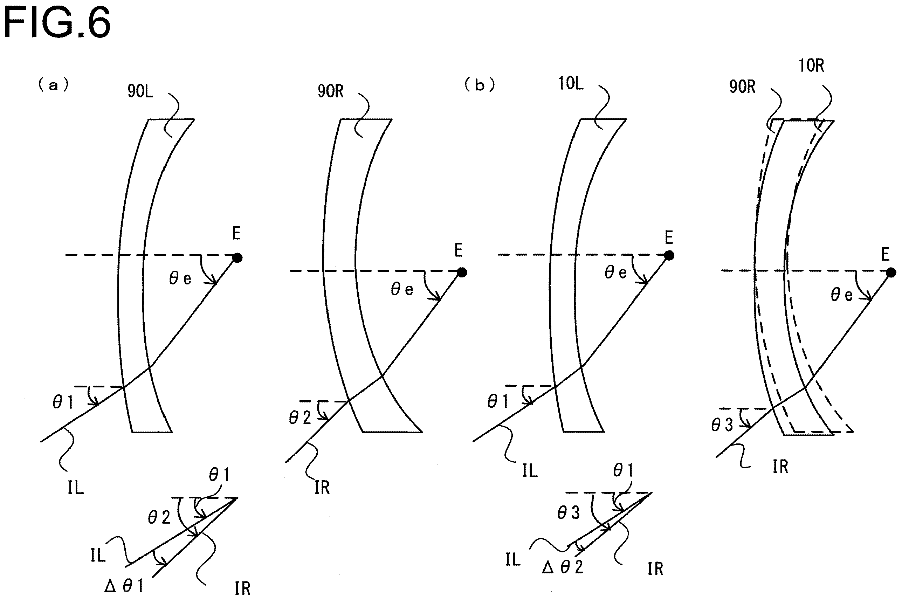

Fig. 6 provides illustrations showing how the angles of deviation may be adjusted for the progressive power lens pair 1 in the embodiment. Fig. 6(a) shows angles of deviation at a left-eye lens 90L and at a right-eye lens 90R in a progressive power lens pair 1 in the related art. Light IL advancing toward a central point E of eyeball rotation in the left eye enters the entry surface of the left-eye lens 90L in the related art with an angle θ1, refracted at the left-eye lens 90L in the related art and advances toward the eyeball rotation central point E. Light IR advancing toward a central point E of eyeball rotation in the right eye enters the entry surface of the right-eye lens 90R in the related art with an angle θ2, refracted at the right-eye lens 90R in the related art and advances toward the eyeball rotation central point E. An angle of deviation measured along the up/down direction in the progressive power lens in the related art is equivalent to a difference Δθ1 between the angle θ2 and the angle θ1.

Fig. 6(b) illustrates how an improvement is made with respect to the angles of deviation at the progressive power lens pair 1 in the embodiment. An explanation will be given in reference to Fig. 6(b) by assuming that a right-eye lens 10R alone is different from the corresponding right-eye lens in the related art so as to simplify the description. The right-eye lens 10R is different from the right-eye lens 90R in the related art indicated by the broken line, in that the addition allocation for the additional power at the object-side surface and the additional power at the eyeball-side surface is adjusted resulting in light IR having entered the right-eye lens 10R with an angle θ3, different from the light entry angle at the right-eye lens in the related art, advancing toward the eyeball rotation center point E. As a result, the difference in the angle of deviation measured along the up/down direction, between the left-eye lens and the right-eye lens in the progressive power lens pair 1 is equivalent to the difference Aθ2 between the angle θ3 and the angle θ1, which is smaller than the angle Δθ1.

Namely, in the progressive power lens pair 1 and the method for designing the progressive power lens pair 1, the allocation parameter ADDR1 - ADDR2 for the right-eye lens 10R and the allocation parameter ADDL1 - ADDL2 for the left-eye lens 10L are set different from each other in order to reduce the difference between the angle of deviation corresponding to the right-eye lens 10R and the angle of deviation corresponding to the left-eye lens 10L.

In addition, in the progressive power lens pair 1, the value calculated as ADDR1 - ADDR2, with ADDR1 and ADDR2 respectively representing the surface additional power at the object-side surface and the surface additional power at the eyeball-side surface of the right-eye lens 10R, and the value calculated as ADDL1 - ADDL2, with ADDL1 and ADDL2 respectively representing the surface additional power at the object-side surface and the surface additional power at the eyeball-side surface of the left-eye lens 10L, are different from each other when the wear additional power ADDR of the right-eye lens 10R and wear additional power ADDL of the left-eye lens 10L are equal to each other, and a comparison parameter calculated based upon at least one set of information among sets of information DFR_max, DFR_min, DFR, DNR_max, DNR_min, DNR, ADDR, θInsR and DR for the right-eye lens 10R and a comparison parameter calculated based upon at least one set of information among sets of information DFL_max, DFL-min, DFL, DNL_max, DNL_min, DNL, ADDL, θInsL and DL for the left-eye lens 10L, take values different from each other, with DFR_max, DFR_min and DFR = (DFR_max + DFR_min) / 2 respectively representing the maximum refractive power, the minimum refractive power and the average refractive power with respect to refraction of a transmitted light beam passing through the far reference point FV at the right-eye lens 10R, and with DNR_max, DNR_min and DNR = (DNR_max + DNR_min) / 2 respectively representing the maximum refractive power, the minimum refractive power and the average refractive power with respect to refraction of a transmitted light beam passing through the near reference point NV at the right-eye lens 10R, with ADDR = DNR-DFR representing the wear additional power calculated as the average refractive power difference between the far reference point FV and the near reference point NV at the right-eye lens 10R, θInsR representing the inset angle at the right-eye lens 10R and DR representing the outer diameter of the right-eye lens 10R, with DFL_max, DFL_min and DFL = (DFL_max + DFL_min) / 2 respectively representing the maximum refractive power, the minimum refractive power and the average refractive power with respect to refraction of a transmitted light beam passing through the far reference point FV at the left-eye lens 10L, and with DNL_max, DNL_min and DNL = (DNL_max + DNL _min) / 2 respectively representing the maximum refractive power, the minimum refractive power and the average refractive power of a transmitted light beam passing through the near reference point NV at the left-eye lens 10L, with ADDL = DNL-DFL representing the wear additional power calculated as the average refractive power difference between the far reference point FV and the near reference point NV at the left-eye lens 10L, and with θInsL representing the inset angle at the left-eye lens 10L and DL representing the outer diameter of the left-eye lens 10L. Accordingly, any difference between the optical characteristics of the left-eye lens and the optical characteristics of the right-eye lens, and more specifically, a difference between the angle of deviation corresponding to the left-eye lens and the angle of deviation corresponding to the right-eye lens, which tends to occur when the left-eye lens 10L and the right-eye lens 10R are asymmetrical to each other or different from each other with respect to an aspect other than the additional power, can be effectively corrected.

The comparison parameters calculated for the progressive power lens pair 1 are each at least one of, a prescribed spherical power, a prescribed astigmatic power, a prescribed astigmatism axis angle, SVR corresponding to the right-eye lens 10R and SVL corresponding to the left-eye lens 10L, with respect to the wearer of the progressive power lens pair 1, and the SVR for the right-eye lens 10R and the SVL for the left-eye lens 10L are respectively expressed as;

$$SVR = SR + CR \times (\sin(AxR))^2$$

$$SVL = SL + CL \times (\sin(AxL))^2.$$

Accordingly, any difference between the optical characteristics of the left-eye lens and the optical characteristics of the right-eye lens and more specifically, a difference between the angle of deviation corresponding to the left-eye lens and the angle of deviation corresponding to the right-eye lens, attributable to a difference between the prescribed spherical power, the prescribed astigmatic powers, the prescribed astigmatism axis angles or the prescribed powers for the up/down direction corresponding to the two eyes can be effectively corrected.

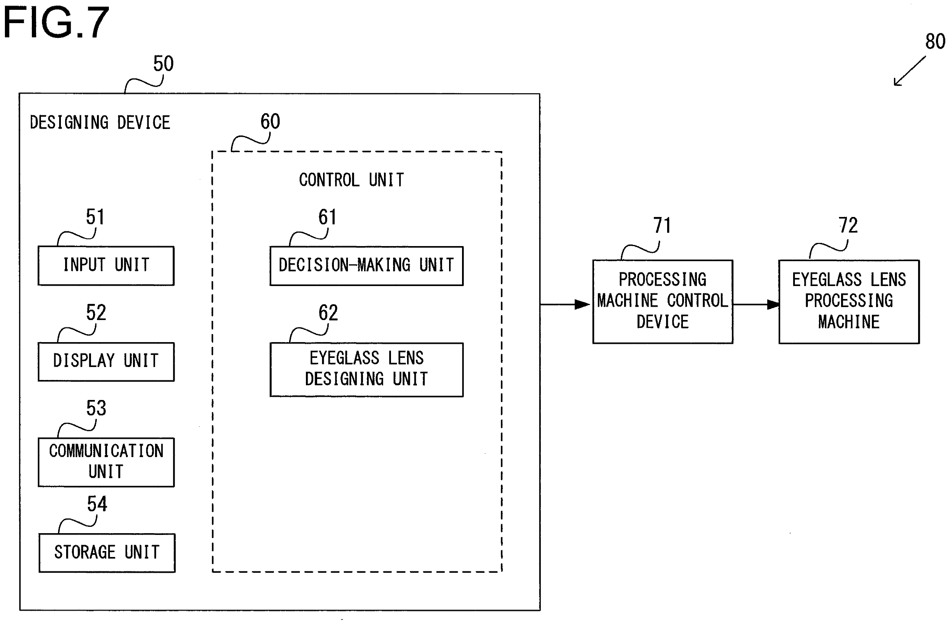

Fig. 7 shows a progressive power lens pair manufacturing system 80 that manufactures the progressive power lens pair 1 in the embodiment. The manufacturing system 80 engaged in production of the progressive power lens pair 1 comprises a designing device 50, a processing machine control device 71 and an eyeglass lens processing machine 72. The designing device 50 includes an input unit 51, a display unit 52, a communication unit 53, a storage unit 54 and a control unit 60. The control unit 60, in turn, includes a decision-making unit 61 and an eyeglass lens designing unit 62. The arrows in the figure indicate how eyeglass lens design data flow.

The input unit 51, configured with an input device such as a keyboard, accepts input data and the like, such as wearer prescription data needed by the control unit 60 when it executes processing, as will be explained later. The input unit 51 outputs the input data to the control unit 60 and to the storage unit 54 for storage, as will be explained later.

It is to be noted that input data may instead be received at the communication unit 53, which will be described later, and then may be output by the communication unit 53 to the control unit 60.

At the display unit 52, configured with a device capable of image display such as a liquid crystal monitor, various numerical values indicated in prescription data input thereto, design data for the progressive power lens pair 1 and the like are displayed. The communication unit 53, constituted with a communication device capable of carrying out communication via the Internet or the like, transmits the design data for the progressive power lens pair 1 obtained through processing executed by the control unit 60 and transmits/receives data as needed.

The storage unit 54, constituted with a non-volatile storage medium such as a memory or a hard disk, exchanges data with the control unit 60 so as to store the input data having been entered via the input unit 51, and various types of data such as the design data for the progressive power lens pair 1 obtained through processing executed by the control unit 60.

The control unit 60, which is configured with a CPU and the like, functions as an executioner engaged in operation of controlling the designing device 50 and executes various types of processing, including prescription value analysis and design processing, by executing a program installed in the storage unit 54 or in a non-volatile memory included in the control unit 60.

The decision-making unit 61 makes decisions in relation to prescription values in the prescription for the wearer, as to whether or not the prescribed additional power for the right-eye lens 10R and the prescribed additional power for the left by lens 10L are equal to each other, and whether or not prescription values other than the prescribed additional powers for the left-eye lens 10L and the right-eye lens 10R are different from each other. The eyeglass lens designing unit 62 sets design parameters based upon the prescription data input from the input unit 51, the results of the decisions made by the decision-making unit 61 and the like. The design parameters include the surface additional powers at the object-side surfaces and the eyeball-side surfaces of the right-eye lens 10R and the left-eye lens 10L, target aberrations to be achieved at a plurality of points on the lens surfaces and the like. The eyeglass lens designing unit 62 designs the overall shape of the progressive power lens pair 1 through design optimization based upon the design parameters.

The processing machine control device 71 controls the eyeglass lens processing machine 72 based upon the design data for the progressive power lens pair 1 transmitted thereto from the designing device 50. The eyeglass lens processing machine 72 manufactures the progressive power lens pair 1 under control executed by the processing machine control device 71.

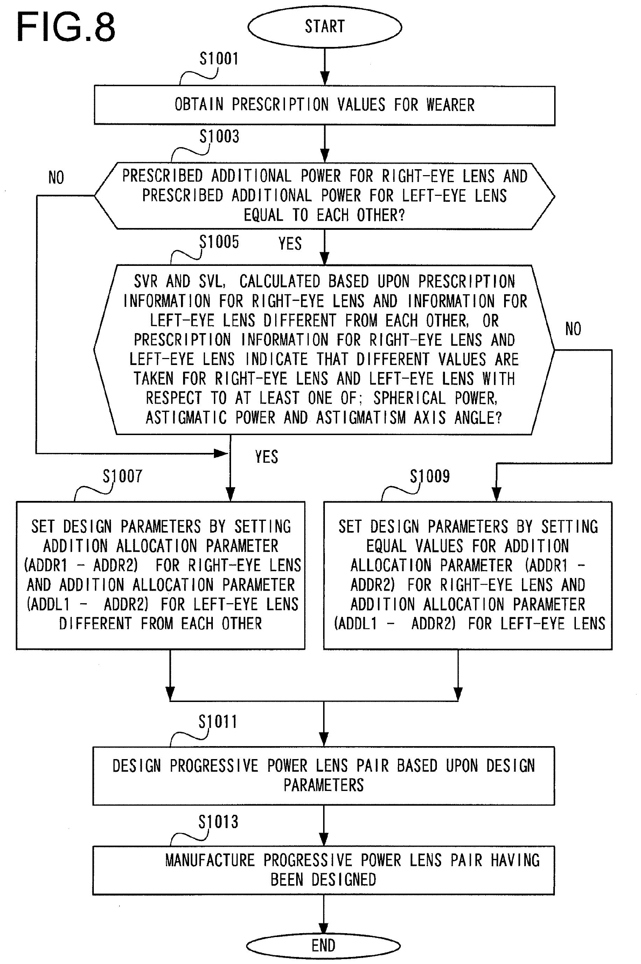

Fig. 8 presents a flowchart of the process through which the progressive power lens pair 1 is manufactured, including the designing method through which the progressive power lens pair 1 is designed. In step S1001, the designing device 50 obtains the wearer's prescription values via the input unit 51. Once the processing in step S1001 is executed, the operation proceeds to step S1003.

In step S1003, the decision-making unit 61 makes a decision as to whether or not the prescribed additional power for the right-eye lens 10R and the prescribed additional power for the left-eye lens 10L are equal to each other. If the prescribed additional power for the right-eye lens 10R and the prescribed additional power for the left-eye lens 10L are equal, the decision-making unit 61 makes an affirmative decision in step S1003, and in this case, the operation proceeds to step S1005, whereas if the prescribed additional powers are different from each other, it makes a negative decision in step S1003 and the operation proceeds to step S1007.

In step S1005, the decision-making unit 61 makes a decision as to whether or not SVR and SVL, calculated based upon the prescription information for the right-eye lens 10R and the left-eye lens 10L take different values or whether or not different values are indicated for the right-eye lens 10R and the left-eye lens 10L in the prescription information with respect to at least one of; the spherical power, the astigmatic power and the astigmatism axis angle. If SVR and SVL, calculated based upon the prescription information for the right-eye lens 10R and the left-eye lens 10L take values different from each other, or if different values are indicated for the right-eye lens 10R and the left-eye lens 10L in the prescription information with respect to at least one of; the spherical power, the astigmatic power and the astigmatism axis angle, the decision-making unit 61 makes an affirmative decision in step S1005 and the operation proceeds to step S1007, whereas if equal to each other, it makes a negative decision in step S1005 and the operation proceeds to step S1009.

In step S1007, the eyeglass lens designing unit 62 sets the various design parameters by selecting different values for the addition allocation parameter (ADDR1 - ADDR2) for the right-eye lens 10R and the addition allocation parameter (ADDL1 - ADDR2) for the left-eye lens 10L. Once the processing in step S1007 is completed, the operation proceeds to step S1011.

In step S1009, the eyeglass lens designing unit 62 sets the various design parameters by selecting equal values for the addition allocation parameter (ADDR1 - ADDR2) for the right-eye lens 10R and the addition allocation parameter (ADDL1 - ADDR2) for the left-eye lens 10L. Once the processing in step S1009 is completed, the operation proceeds to step S1011.

In step S1011, the eyeglass lens designing unit 61 designs the progressive power lens pair 1 based upon the design parameters set in step S1007 or step S1009. Once the processing in step S1011 is completed, the operation proceeds to step S1013. In step S1013, the eyeglass lens processing machine 72 manufactures eyeglass lenses before the processing ends.

In the method for designing the progressive power lens pair 1 achieved in the embodiment, design parameters are set by selecting different values for ADDR1 - ADDR2 and ADDL1 - ADDL2, with ADDR1 and ADDR2 respectively representing the surface additional power at the object-side surface and the surface additional power at the eyeball-side surface of the right-eye lens 10R and ADDL1 and ADDL2 respectively representing the surface additional power at the object-side surface and the surface additional power at the eyeball-side surface of the left-eye lens 10L when prescribed additional power for the right-eye lens 10R and prescribed additional power for the left-eye lens 10L in the progressive power lens pair 1 are equal to each other, and: the prescription information for the progressive power lens pair indicates that the power SVR achieved at the optical center of the right-eye lens 10R along the up/down direction and the power SVL achieved at the optical center of the left-eye lens 10L along the up/down direction are different from each other; or the prescription information for the progressive power lens pair indicates that the spherical power SR for the right-eye lens 10R and the spherical power SL for the left-eye lens 10L are different from each other, that the astigmatic power CR for the right-eye lens 10R and the astigmatic power CL for the left-eye lens 10L are different from each other, or that the astigmatism axis angle for the right-eye lens 10R and the astigmatism axis angle for the left-eye lens 10L are different from each other. Accordingly, any difference between the optical characteristics of the left-eye lens and the optical characteristics of the right-eye lens and more specifically, any difference between the angle of deviation corresponding to the left-eye lens and the angle of deviation corresponding to the right lens, attributable to a difference between prescription values corresponding to the two eyes with respect to the spherical power, the astigmatic power, the astigmatism axis angle or the power for the up/down direction, can be effectively corrected.

The following variations are also within the scope of the present invention, and may be adopted in combination with the embodiment described above.

(Variation 1)

In the embodiment described above, different values are selected for the addition allocation parameter for the right-eye lens 10R and the addition allocation parameter for the left-eye lens 10L. Also, different base curves may be assumed at the distance zones F of the left-eye lens and the right-eye lens.

BCRf representing a distance zone base curve at the object-side surface of the right-eye lens 10R and BCLf representing a distance zone base curve at the object-side surface of the left eye 10L in the progressive power lens pair 1 may be set different from each other when the spherical power SR at the right-eye lens 10R and the spherical power SL at the left-eye lens 10L are different from each other or the spherical equivalent SR + CR/2 corresponding to the right-eye lens 10R and the spherical equivalent SL + CL/2 corresponding to the left-eye lens 10L are different from each other. Accordingly, any difference between the optical characteristics of the left-eye lens and the optical characteristics of the right-eye lens and, more specifically, a difference between the angle of deviation corresponding to the left-eye lens and the angle of deviation corresponding to the right-eye lens, attributable to a difference between prescription values or the like corresponding to the two eyes, can be effectively corrected over a greater range.

(Variation 2)

In the method for designing the progressive power lens pair 1, a value representing (ADDR1 - ADDR2) - (ADDL1 - ADDL2) may be set based upon line-of-sight information indicating a sight-line of the wearer, detected while he wears a reference progressive power lens pair assuming equal values for the addition allocation parameter ADDR1 - ADDR2 for the right-eye lens and the addition allocation parameter ADDL1 - ADDL2 for the left-eye lens. Accordingly, any difference between the optical characteristics of the left-eye lens and the optical characteristics of the right-eye lens and more specifically, a difference between the angle of deviation corresponding to the left lens and the angle of deviation corresponding to the right-eye lens can be effectively corrected based upon the line-of-sight information obtained before the addition allocations for the left-eye lens 10L and the right-eye lens 10R are adjusted.

The line-of-sight information mentioned above may be acquired by, for instance, detecting a line of sight of a subject so as to obtain sight-line transmission point information with respect to sight-line transmission points on the progressive power lenses 10 in conjunction with a sight-line detection device disclosed in International Publication No. 2014/046206 or the like. The subject first puts on a reference progressive power lens pair assuming equal values for the addition allocation parameter ADDR1 - ADDR2 for the right-eye lens and the addition allocation parameter ADDL1 - ADDL2 for the left-eye lens. The subject wearing the reference progressive power lens pair uses the sight-line detection device to detect and record the positions of transmission points on the reference progressive power lens pair with respect to the lines of sight of the left eye and the right eye gazing at one of a plurality of points. The designing device 50 analyzes gazing point information and transmission point information obtained through detection and designs the progressive power lens pair 1 based upon the analysis results. The designing device 1 designs the progressive power lens pair 1 by ensuring that the differences between the positions of the sight-line transmission points measured along the up/down direction on the left-eye and right-eye progressive power lenses are less than the differences measured on the reference progressive power lens pair, in correspondence to at least one or more of the plurality of gazing points.

(Variation 3)

In the method for designing the progressive power lens pair 1, a value taken for (ADDR1 - ADDR2) - (ADDL1 - ADDL2) representing the difference between the addition allocation parameters for the right-eye lens 10R and the left-eye lens 10L in the progressive power lens pair 1, may be set based upon an offset of positions at which an object is viewed at the near reference points NV of a right-eye lens and a left-eye lens of a reference progressive power lens pair assuming equal values for the addition allocation parameter ADDR1 - ADDR2 for the right-eye lens and the addition allocation parameter ADDL1 - ADDL2 for the left-eye lens, detected on the wearer wearing the reference progressive power lens pair. Accordingly, any difference between the optical characteristics of the left-eye lens and the optical characteristics of the right-eye lens and more specifically, a difference between the angle of deviation corresponding to the left-eye lens and the angle of deviation corresponding to the right-eye lens can be effectively corrected based upon the offset quantity between sight-lines detected without assuming different values for the addition allocations for the left-eye lens 10L and the right-eye lens 10R.

The offset between the positions at which an object is viewed at the near reference points NV mentioned above can be detected by using a device capable of displaying separate images to be viewed by the left eye and by the right eye.

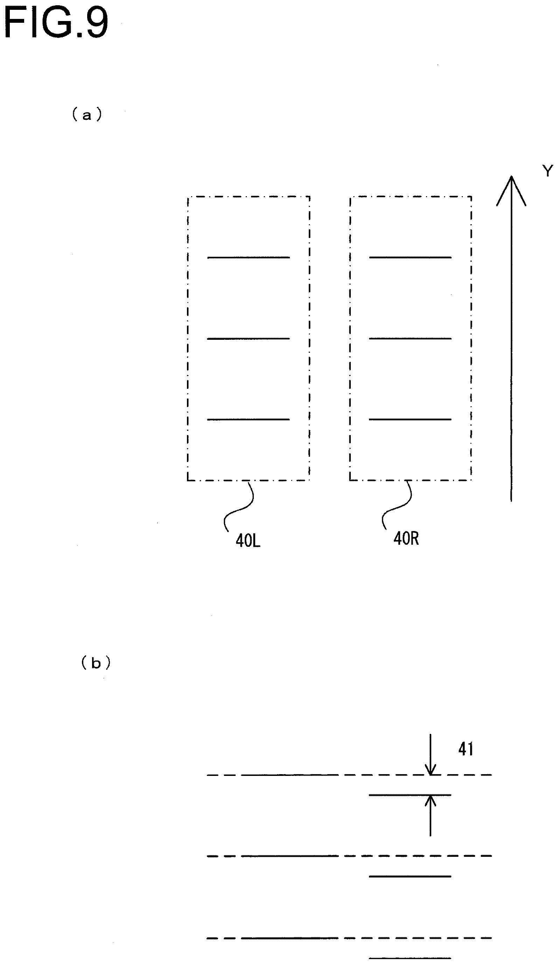

Fig. 9(a) presents examples of a left-eye image 40L and a right-eye image 40R to be viewed respectively by the left eye and by the right eye. The left-eye image 40L and the right image 40R each include three line segments set one after another along the Y axis, i.e., along the top/bottom direction with respect to the progressive power lens pair. The lateral direction in Fig. 9 runs along a direction in which a line connecting the left eye and the right eye extends. The line segments in the left-eye image 40L and the right-eye image 40R are displayed so that corresponding line segments in the two images assume the same height wise position along the up/down direction on the screen. The subject puts on eyeglasses fitted with the reference progressive power lens pair and looks at the left-eye image 40L and the right image 40R by binocular viewing. An offset quantity manifesting along the up/down direction with respect to the line segments viewed by the left eye and by the right eye engaged in binocular viewing is measured.

Fig. 9(b) schematically illustrates an offset quantity 41 manifested by the sight-lines along the up/down direction. When sight-line passing points with respect to lines-of-sight through two lenses, do not align with each other in the left-eye image 40L and the right-eye image 40R in correspondence to a given gazing point, the offset quantity 41 at which the line segments are in alignment in binocular view is measured by gradually shifting either the left-eye image 40L or the right-eye image 40R. Based upon the offset quantity thus measured, the designing device 50 designs the progressive power lens pair 1. The designing device 50 designs the progressive power lens pair 1 by ensuring that the offset quantity manifested by the line segments along the up/down direction when the left-eye image 40L and the right-eye image 40R are viewed by binocular viewing is less than the offset quantity measured when the reference progressive power lens pair is worn.

(Implementation Example 1)

In conjunction with the prescription values indicated in Table 1, the object-side surface additional powers, the eyeball-side surface additional powers and the object-side surface distance zone base curves are set as indicated in Table 2.

[Table 1]

Table 1 Various prescription values indicated in prescription information

|  | Right eye variable | Right eye prescription value | Left eye variable | Left eye prescription value |
|---|---|---|---|---|
| Spherical power (D) | SR | -4.25 | SL | -3.25 |
| Astigmatic power (D) | CR | -0.50 | CL | -0.25 |
| Astigmatism axis (°) | AXR | 0.00 | AXL | 50.00 |
| Prescribed additional power (D) | ADDR | 1.00 | ADDL | 1.00 |
| Inset angle (°) | θInsR | 9.7 | θInsL | 9.7 |
| Outer diameter (mm) | DR | 75 | DL | 75 |

(continued)

|  | Right eye variable | Right eye prescription value | Left eye variable | Left eye prescription value |
|---|---|---|---|---|
| Corneal vertex distance (mm) | VDR | 12.00 | VDL | 12.00 |

[Table 2]

Table 2 Object-side surface additional power, eyeball-side surface additional power and object-side surface distance zone base curves in progressive power lens pair 1 in Implementation Example 1

|  | Right eye variable | Value (right eye) | Left eye variable | Value (left eye) |
|---|---|---|---|---|
| Object-side surface additional power (D) | ADDR1 | 2.00 | ADDL1 | 1.50 |
| Eyeball-side surface additional power (D) | ADDR2 | -1.00 | ADDL2 | -0.50 |
| Object-side surface distance zone base curve (1/m) | BCRf | 2.00 | BCLf | 2.00 |

Various numerical values achieved in conjunction with the progressive power lens pair 1 in Implementation Example 1 are explained below.

The condition expressed in (1) is satisfied, since |(ADDR1 - ADDR2) - (ADDL1 - ADDL2)| = 1.

The condition expressed in (2) is satisfied, since |(ADDR1 - ADDR2) - (ADDL1 - ADDL2)| / ISR - SL| = 1.

The condition expressed in (3) is satisfied, since |(ADDR1 - ADDR2) - (ADDL1 - ADDL2)| / |(SR + CR/2) - (SL + CL/2)| = 0.89.

The condition expressed in (4) is satisfied, since |(ADDR1 - ADDR2) - (ADDL1 - ADDL2)| / |SVR - SVL| = 1.18.

The coordinate values (x, y) of the intersecting points at which a straight line passing through the optical center along the up/down direction intersects the frame are (0, 12) at the upper end and (0, -20) at the lower end, both at the left-eye lens and at the right-eye lens. The sag quantities measured at one surface in correspondence to these points take the following values.

right eye upper end: SAG1R (0, 12) = 0.277

right eye lower end: SAG1R (0, -20) = 1.080

left eye upper end: SAG1L (0, 12) = 0.276

left eye lower end: SAG1L (0, -20) = 0.999

Based upon these values, |(SAG1R (xtR, ytR) - SAG1R (xbR, ybR)) - (SAG1L (xtL, ytL) - SAG1L (xbL, ybL))| = 0.08 is calculated, thereby satisfying the condition expressed in (5).

The condition expressed in (6) is satisfied, since |SAG1R (xbR, ybR) - SAG1L (xbL, ybL)| = 0.081.

Since angle $\theta$R = atan((SAG1R(0, 12) - SAG1R(0, -20))/(12 - (-20))) = -1.44(°) and angle $\theta$L = atan((SAG1L(0, 12) - SAG1L(0, -20))/(12 - (-20))) = -1.29 (°), |$\theta$R- $\theta$L| = 0.15, thereby satisfying the condition expressed in (7).

Among values calculated for |SAG1R (x, y) - SAG1L (x', y')| in correspondence to various points on the frame perimeter, the maximum value is 0.17 mm and the minimum value is 0.00085 mm, thereby satisfying the condition expressed in (8).

(Comparison Example 1)

In Comparison Example 1 in conjunction with the prescription values indicated in Table 1 presented earlier, the object-side surface additional powers, the eyeball-side surface additional powers and the object-side surface distance zone base curves are set as indicated in Table 3 below.

[Table 3]

Table 3 Object-side surface additional power, eyeball-side surface additional power and object-side surface distance zone base curves in the progressive power lens pair 1 in Comparison Example 1

| | Right eye variable | Value (right eye) | Left eye variable | Value (left eye) |
|---|---|---|---|---|
| Object-side surface additional power (D) | ADDR1 | 1.50 | ADDL1 | 1.50 |
| Eyeball-side surface additional power (D) | ADDR2 | -0.50 | ADDL2 | -0.50 |
| Object-side surface distance zone base curve (1/m) | BCRf | 2.00 | BCLf | 2.00 |

The angles of deviation along the up/down direction, measured on a lens principle meridian located further downward relative to the optical axes of the left-eye lens and the right-eye lens in the progressive power lens pair in Comparison Example 1 and in the progressive power lens pair in Implementation Example 1 take values respectively presented in Table 4 and Table 5 presented below. The lower side along the up/down direction is designated as the positive side with respect to the rotation angle. A deviation angle improvement factor (%) of Implementation Example 1 over Comparison Example 1, calculated as expressed in (10) below, is indicated in Table 6.

100 x (left/right lens deviation angle difference in Comparison Example 1 - left/right lens deviation angle difference in Implementation Example 1)/left/right lens deviation angle difference in Comparison Example 1… (10)

[Table 4]

Table 4 Angle of deviation in progressive power lens pair in Comparison Example 1

| Rotation angle (°) | Right-eye lens deviation angle (°) | Left-eye lens deviation angle (°) | Left/right lens deviation angle difference (°) |
|---|---|---|---|
| 0 | 0.03 | 0.03 | 0.00 |
| 4 | 0.47 | 0.34 | 0.13 |
| 8 | 0.91 | 0.64 | 0.27 |
| 12 | 1.35 | 0.93 | 0.42 |
| 16 | 1.80 | 1.23 | 0.57 |
| 20 | 2.28 | 1.53 | 0.75 |
| 24 | 2.78 | 1.86 | 0.92 |
| 28 | 3.33 | 2.20 | 1.13 |
| 32 | 3.94 | 2.57 | 1.37 |
| 36 | 4.64 | 2.98 | 1.66 |
| 40 | 5.45 | 3.47 | 1.98 |
| 44 | 6.42 | 4.04 | 2.38 |
| 48 | 7.60 | 4.73 | 2.87 |
| 52 | 9.04 | 5.54 | 3.50 |

(continued)

| Rotation angle (°) | Right-eye lens deviation angle (°) | Left-eye lens deviation angle (°) | Left/right lens deviation angle difference (°) |
|---|---|---|---|
| 56 | 10.83 | 6.54 | 4.29 |
| 60 | 13.21 | 7.82 | 5.39 |

[Table 5]

Table 5 Angle of deviation in progressive power lens pair in Implementation Example 1

| Rotation angle (°) | Right-eye lens deviation angle (°) | Left-eye lens deviation angle (°) | Left/right lens deviation angle difference (°) |
|---|---|---|---|
| 0 | 0.03 | 0.03 | 0.00 |
| 4 | 0.47 | 0.34 | 0.13 |
| 8 | 0.91 | 0.64 | 0.27 |
| 12 | 1.35 | 0.93 | 0.42 |
| 16 | 1.80 | 1.23 | 0.57 |
| 20 | 2.27 | 1.53 | 0.74 |
| 24 | 2.77 | 1.86 | 0.91 |
| 28 | 3.32 | 2.20 | 1.12 |
| 32 | 3.92 | 2.57 | 1.35 |
| 36 | 4.60 | 2.98 | 1.62 |
| 40 | 5.39 | 3.47 | 1.92 |
| 44 | 6.34 | 4.04 | 2.30 |
| 48 | 7.47 | 4.73 | 2.74 |
| 52 | 8.85 | 5.54 | 3.31 |
| 56 | 10.53 | 6.54 | 3.99 |
| 60 | 12.74 | 7.82 | 4.92 |

[Table 6]

Table 6 Deviation angle improvement factor in Implementation Example 1 over Comparison Example 1 (%)

| Rotation angle (°) | Left/right lens deviation angle difference in comparison example 1 (°) | Left/right lens deviation angle difference in implementation example 1 (°) | Improvement factor (%) |
|---|---|---|---|
| 0 | 0.00 | 0.00 | 0.00 |
| 4 | 0.13 | 0.13 | 0.00 |
| 8 | 0.27 | 0.27 | 0.00 |
| 12 | 0.42 | 0.42 | 0.00 |
| 16 | 0.57 | 0.57 | 0.00 |
| 20 | 0.75 | 0.74 | 1.33 |

(continued)

| Rotation angle (°) | Left/right lens deviation angle difference in comparison example 1 (°) | Left/right lens deviation angle difference in implementation example 1 (°) | Improvement factor (%) |
|---|---|---|---|
| 24 | 0.92 | 0.91 | 1.09 |
| 28 | 1.13 | 1.12 | 0.88 |
| 32 | 1.37 | 1.35 | 1.46 |
| 36 | 1.66 | 1.62 | 2.41 |
| 40 | 1.98 | 1.92 | 3.03 |
| 44 | 2.38 | 2.30 | 3.36 |
| 48 | 2.87 | 2.74 | 4.53 |
| 52 | 3.50 | 3.31 | 5.43 |
| 56 | 4.29 | 3.99 | 6.99 |
| 60 | 5.39 | 4.92 | 8.72 |

(Implementation Example 2)

In conjunction with the prescription values indicated in [Table 7], the object-side surface additional powers, the eyeball-side surface additional powers and the object-side surface distance zone base curves are set as indicated in [Table 8].

[Table 7]

Table 7 Various prescription values indicated in prescription information

|  | Right eye variable | Right eye prescription value | Left eye variable | Left eye prescription value |
|---|---|---|---|---|
| Spherical power (D) | SR | -4.25 | SL | -3.25 |
| Astigmatic power (D) | CR | -0.50 | CL | -0.25 |
| Astigmatism axis (°) | AXR | 0.00 | AXL | 50.00 |
| Prescribed additional power (D) | ADDR | 1.00 | ADDL | 1.00 |
| Inset angle (°) | θInsR | 10.3 | θInsL | 10.3 |
| Outer diameter (mm) | DR | 75 | DL | 75 |
| Corneal vertex distance (mm) | VDR | 12.00 | VDL | 12.00 |

[Table 8]

Table 8 Object-side surface additional powers, eyeball-side surface additional powers and object-side surface distance zone base curves in progressive power lens pair 1 in Implementation Example 2

| | Right eye variable | Value (right eye) | Left eye variable | Value (left eye) |
|---|---|---|---|---|
| Object-side surface additional power (D) | ADDR1 | 2.00 | ADDL1 | 1.50 |
| Eyeball-side surface additional power (D) | ADDR2 | -1.00 | ADDL2 | -0.50 |
| Object-side surface distance zone base curve (1/m) | BCRf | 4.00 | BCLf | 2.00 |

Various numerical values achieved in conjunction with the progressive power lens pair 1 in Implementation Example 2 are explained below.

The condition expressed in (1) is satisfied, since |(ADDR1 - ADDR2) - (ADDL1 - ADDL2)| = 1.

The condition expressed in (2) is satisfied, since |(ADDR1 - ADDR2) - (ADDL1 - ADDL2)| / |SR - SL| = 1.

The condition expressed in (3) is satisfied, since |(ADDR1 - ADDR2) - (ADDL1 - ADDL2)| / |(SR + CR/2) - (SL + CL/2)| = 0.89.

The condition expressed in (4) is satisfied, since |(ADDR1 - ADDR2) - (ADDL1 - ADDL2)| / |SVR - SVL| = 1.18.

The coordinate values (x, y) of the intersecting points at which a straight line passing through the optical center along the vertical direction intersects the frame are (0, 12) at the upper end and (0, -20) at the lower end, both at the left-eye lens and at the right-eye lens. The sag quantities measured at one surface in correspondence to these points take the following values.

right eye upper end: SAG1R (0, 12) = 0.481
right eye lower end: SAG1R (0, -20) = 1.652
left eye upper end: SAG1L (0, 12) = 0.276
left eye lower end: SAG1L (0, -20) = 0.999
based upon these values;
|(SAG1R (xtR, ytR) - SAG1R (xbR, ybR)) - (SAG1L (xtL, ytL) - SAG1L (xbL, ybL))| = 0.448 is calculated, thereby satisfying the condition expressed in (5).

The condition expressed in (6) is satisfied, since |SAG1R (xbR, ybR)) - SAG1L (xbL, ybL)| = 0.653.
Since angle θR = atan((SAG1R(0, 12) - SAG1R(0, -20))/(12 - (-20))) = -2.10 (°) and an angle θL = atan((SAG1L(0, 12) - SAG1L(0, -20))/(12 - (-20))) = -1.29 (°), |θR - θL| = 0.81, thereby satisfying the condition expressed in (7).
Among values calculated for |SAG1R (x, y) - SAG1L (x', y')| in correspondence to various points on the frame perimeter, the maximum value is 1.915 mm and the minimum value is 0.178 mm, thereby satisfying the condition expressed in (8).

(Comparison Example 2)

In comparison example 2, in conjunction with the prescription values indicated in Table 7 presented earlier, the object-side surface additional powers, the eyeball-side surface additional powers and the object-side surface distance zone base curves are set as indicated in Table 3.
The angles of deviation along the up/down direction, measured on a lens principle meridian located further downward relative to the optical axes of the left-eye and the right-eye progressive power lens pair in Comparison Example 2 and in the progressive power lens pair in Implementation Example 2 take values respectively presented in Table 9 and Table 10 below. The lower side along the up/down direction is designated as the positive side with respect to the rotation angle. A deviation angle improvement factor (%) of Implementation Example 1 over Comparison Example 2, calculated as expressed in (11) below, is indicated in Table 11.

100 x (left/right lens deviation angle difference in Comparison Example 2 - left/right lens deviation angle difference in Implementation Example 2)/left/right lens deviation angle difference in comparison example 2… (11)

[Table 9]

Table 9 Angle of deviation in progressive power lens pair in Comparison Example 2

| Rotation angle (°) | Right-eye lens deviation angle (°) | Left-eye lens deviation angle (°) | Left/right lens deviation angle difference (°) |
|---|---|---|---|
| 0 | 0.00 | 0.00 | 0.00 |
| 4 | 0.46 | 0.32 | 0.14 |
| 8 | 0.92 | 0.63 | 0.29 |
| 12 | 1.38 | 0.95 | 0.43 |
| 16 | 1.86 | 1.27 | 0.59 |
| 20 | 2.37 | 1.60 | 0.77 |
| 24 | 2.91 | 1.94 | 0.97 |
| 28 | 3.49 | 2.31 | 1.18 |
| 32 | 4.13 | 2.71 | 1.42 |
| 36 | 4.86 | 3.16 | 1.70 |
| 40 | 5.71 | 3.68 | 2.03 |
| 44 | 6.73 | 4.31 | 2.42 |
| 48 | 7.97 | 5.07 | 2.90 |
| 52 | 9.50 | 5.99 | 3.51 |
| 56 | 11.43 | 7.13 | 4.30 |
| 60 | 14.00 | 8.58 | 5.42 |

[Table 10]

Table 10 Angle of deviation in progressive power lens pair in Implementation Example 2

| Rotation angle (°) | Right-eye lens deviation angle (°) | Left-eye lens deviation angle (°) | Left/right lens deviation angle difference (°) |
|---|---|---|---|
| 0 | 0.00 | 0.00 | 0.00 |
| 4 | 0.45 | 0.32 | 0.13 |
| 8 | 0.91 | 0.63 | 0.28 |
| 12 | 1.36 | 0.95 | 0.41 |
| 16 | 1.83 | 1.27 | 0.56 |
| 20 | 2.32 | 1.60 | 0.72 |
| 24 | 2.83 | 1.94 | 0.89 |
| 28 | 3.37 | 2.31 | 1.06 |

(continued)

| Rotation angle (°) | Right-eye lens deviation angle (°) | Left-eye lens deviation angle (°) | Left/right lens deviation angle difference (°) |
|---|---|---|---|
| 32 | 3.96 | 2.71 | 1.25 |
| 36 | 4.61 | 3.16 | 1.45 |
| 40 | 5.34 | 3.68 | 1.66 |
| 44 | 6.20 | 4.31 | 1.89 |
| 48 | 7.19 | 5.07 | 2.12 |
| 52 | 8.37 | 5.99 | 2.38 |
| 56 | 9.75 | 7.13 | 2.62 |
| 60 | 11.46 | 8.58 | 2.88 |

[Table 11]

Table 11 Deviation angle improvement factor in Implementation Example 2 over Comparison Example 2 (%)

| Rotation angle (°) | Left/right lens deviation angle difference in comparison example 2 (°) | Left/right lens deviation angle difference in implementation example 2 (°) | Improvement factor (%) |
|---|---|---|---|
| 0 | 0.00 | 0.00 | 0.00 |
| 4 | 0.14 | 0.13 | 7.14 |
| 8 | 0.29 | 0.28 | 3.45 |
| 12 | 0.43 | 0.41 | 4.65 |
| 16 | 0.59 | 0.56 | 5.08 |
| 20 | 0.77 | 0.72 | 6.49 |
| 24 | 0.97 | 0.89 | 8.25 |
| 28 | 1.18 | 1.06 | 10.17 |
| 32 | 1.42 | 1.25 | 11.97 |
| 36 | 1.70 | 1.45 | 14.71 |
| 40 | 2.03 | 1.66 | 18.23 |
| 44 | 2.42 | 1.89 | 21.90 |
| 48 | 2.90 | 2.12 | 26.90 |
| 52 | 3.51 | 2.38 | 32.19 |
| 56 | 4.30 | 2.62 | 39.07 |
| 60 | 5.42 | 2.88 | 46.86 |

The present invention is in no way limited to the particulars of the embodiment described above. Any other mode conceivable within the scope of the technical teaching of the present invention is also within the scope of the present invention.

REFERENCE SIGNS LIST

1... progressive power lens pair, 10... progressive power lens, 10L... left-eye lens, 10R... right-eye lens, 11... optical center, 50... designing device, 60... control unit, DL, DR... outer diameter, $\theta$insR ... inset angle, SAG1R, SAG1L...

sag quantity

**Claims**

1. A progressive power lens pair (1), comprising a left-eye lens (10L) and a right-eye lens (10R) each having a distance zone (F) suited for distance vision, a near zone (N) set at a position different from a position of the distance zone and achieving refractive power suited for near vision and a progressive zone (P) located between the distance zone and the near zone, where refractive power changes continuously, wherein:

   an object-side surface and an eyeball-side surface of the right-eye lens and an object-side surface and an eyeball-side surface of the left-eye lens are set by ensuring that ADDR1 - ADDR2 and ADDL1 - ADDL2 take values different from each other,
   with ADDR1 and ADDR2 respectively representing surface additional power at the object-side surface and surface additional power at the eyeball-side surface of the right-eye lens, and
   with ADDL1 and ADDL2 respectively representing surface additional power at the object-side surface and surface additional power at the eyeball-side surface of the left-eye lens,
   on condition that prescribed additional power for the right-eye lens and prescribed additional power for the left-eye lens are equal to each other in the progressive power lens pair, and prescription information for the progressive power lens pair indicates that power SVR along an up/down direction achieved at an optical center of the right-eye lens and power SVL along the up/down direction achieved at an optical center of the left-eye lens are different from each other, that spherical power SR at the right-eye lens and spherical power SL at the left-eye lens are different from each other, that astigmatic power CR at the right-eye lens and astigmatic power CL at the left-eye lens are different from each other, or that an astigmatism axis angle AxR corresponding to the right-eye lens and an astigmatism axis angle AxL corresponding to the left-eye lens are different from each other, wherein the spherical powers SR and SL, the astigmatic powers CR and CL and the astigmatic axis angles AxR and AxL correspond to the prescription values;
   the progressive power lens pair satisfies a condition expressed as

$$ADDR1 < ADDL1,$$

   when the spherical power SR at the right-eye lens is greater than the spherical power SL at the left-eye lens, the spherical equivalent SR + CR/2 for the right-eye lens is greater than the spherical equivalent SL + CL/2 for the left-eye lens, or power SVR along an up/down direction achieved at an optical center of the right-eye lens is greater than power SVL along an up/down direction achieved at an optical center of the left-eye lens; and
   the progressive power lens pair satisfies a condition expressed as

$$ADDL1 < ADDR1,$$

   when the spherical power SL at the left-eye lens is greater than the spherical power SR at the right-eye lens, the spherical equivalent SL + CL/2 for the left-eye lens is greater than the spherical equivalent SR + CR/2 for the right-eye lens, or power SVL along an up/down direction achieved at an optical center of the left-eye lens is greater than power SVR along an up/down direction achieved at an optical center of the right-eye lens,

$$SVR \text{ being defined by the expression } SR + CR \times (\sin(AxR))^2,$$

   and

$$SVL \text{ being defined by the expression } SL + CL \times (\sin(AxL))^2.$$

2. The progressive power lens pair according to claim 1, wherein:
   BCRf representing a distance zone base curve at the objective side surface of the right-eye lens and BCLf representing a distance zone base curve at the object-side surface of the left-eye lens are different from each other, when the spherical power SR at the right-eye lens and a spherical power SL at the left lens are different from each other, or a spherical equivalent SR + CR/2 for the right-eye lens and the spherical equivalent SL + CL/2 for the left-eye lens are different from each other.

3. The progressive power lens pair according to claim 1 or 2 that satisfies a condition expressed in units of diopters as;

$$0 < |\,(ADDR1 - ADDR2) - (ADDL1 - ADDL2)\,| \le 4 \ldots (1).$$

4. The progressive power lens pair according to any one of claims 1 through 3, that satisfies a condition expressed as;

$$0 < |\,(ADDR1 - ADDR2) - (ADDL1 - ADDL2)\,|/\,|SR - SL\,| \le 16 \ldots (2)$$

when the spherical power SR at the right-eye lens and the spherical power SL at the left-eye lens are different from each other.

5. The progressive power lens pair according to any one of claims 1 through 3, that satisfies a condition expressed as;

$$0 < |\,(ADDR1 - ADDR2) - (ADDL1 - ADDL2)\,|/\,|\,(SR + CR/2) - (SL + CL/2)\,| \le 32 \ldots (3)$$

when a spherical equivalent SR + CR/2 for the right-eye lens and a spherical equivalent SL + CL/2 for the left-eye lens take values different from each other.

6. The progressive power lens pair according to any one of claims 1 through 3, wherein:

    SVR and SVL are different from each other; and
    a condition expressed as;

$$0 < |\,(ADDR1 - ADDR2) - (ADDL1 - ADDL2)\,| / |\,(SVR - SVL)\,| \le 16 \ldots (4)$$

    is satisfied.

7. The progressive power lens pair according to any one of claims 1 through 6, wherein:
    a condition expressed in units of diopters as;

$$0 < |\,(ADDR1 - ADDR2) - (ADDL1 - ADDL2)\,| \le 4 \ldots (1)$$

    is satisfied when a condition expressed in units of millimeters as;

$$0 \le |\,(SAG1R(xtR, ytR) - SAG1R(xbR, ybR)) - (SAG1L(xtL, ytL) - SAG1L(xbL, ybL))\,| \le 4 \ldots (5)$$

    is satisfied,
    with SAG1R(x, y) indicating a sag quantity representing an extent of sag measured along an optical axis in relation to the right-eye lens at a coordinate point (x, y) taken on a plane passing through an object-side vertex of the right-eye lens and ranging perpendicular to the optical axis of the right-eye lens,
    with SAG1L(x, y) indicating a sag quantity measured along an optical axis in relation to the left-eye lens at a coordinate point (x, y) taken on a plane passing through an object-side vertex of the left-eye lens and ranging perpendicular to the optical axis of the left-eye lens,

with (xtR, ytR) and (xbR, ybR) respectively indicating a coordinate point at which a straight line passing through a position taken by the optical axis of the right-eye lens fitted inside a frame and extending along an up/down direction intersects a top end of the frame and a coordinate point at which the straight line intersects a bottom end of the frame; and with (xtL, ytL) and (xbL, ybL) respectively indicating a coordinate point at which straight line passing through a position taken by the optical axis of the left-eye lens fitted inside the frame, and extending along an up/down direction intersects a top end of the frame and a coordinate point at which the straight line intersects the bottom end of the frame.

8. The progressive power lens pair according to any one of claims 1 through 6, wherein:
a condition expressed in units of diopters as;

$$0 < | (ADDR1 - ADDR2) - (ADDL1 - ADDL2) | \leq 4 \dots (1)$$

is satisfied when a condition expressed in units of millimeters as;

$$0 \leq | SAG1R(xbR, ybR) - SAG1L(xbL, ybL) | \leq 4 \dots (6)$$

is satisfied,
with SAG1R(x, y) indicating a sag quantity measured along an optical axis in relation to the right-eye lens at a coordinate point (x, y) taken on a plane passing through an object-side vertex of the right-eye lens and ranging perpendicular to the optical axis of the right-eye lens,
with SAG1L(x, y) indicating a sag quantity measured along an optical axis in relation to the left-eye lens at a coordinate point (x, y) taken on a plane passing through the object-side vertex of the left-eye lens and ranging perpendicular to the optical axis of the left-eye lens,
with (xbR, ybR) indicating a coordinate point at which a straight line passing through a position taken by the optical axis of the right-eye lens fitted inside a frame, and extending along an up/down direction, intersects a bottom end of the frame; and
with (xbL, ybL) indicating a coordinate point at which a straight line passing through a position taken by the optical axis of the left-eye lens fitted inside a frame, and extending along the up/down direction, intersects the bottom and of the frame.

9. The progressive power lens pair according to any one of claims 1 through 6, wherein:
a condition expressed in units of diopters as;

$$0 < | (ADDR1 - ADDR2) - (ADDL1 - ADDL2) | \leq 4 \dots (1)$$

is satisfied when a condition expressed in units of degrees as;

$$0 \leq | \theta R - \theta L | \leq 5 \dots (7)$$

is satisfied
with SAG1R(x, y) indicating a sag quantity measured along an optical axis in relation to the right-eye lens at a coordinate point (x, y) taken on a plane passing through an object-side vertex of the right-eye lens and ranging perpendicular to an optical axis of the right-eye lens,
with SAG1L(x, y) indicating a sag quantity measured along an optical axis in relation to the left-eye lens at a coordinate point (x, y) taken on a plane passing through an object-side vertex of the left-eye lens and ranging perpendicular to the optical axis of the left-eye lens,
with (xtR, ytR) and (xbR, ybR) respectively indicating a coordinate point at which a straight line passing through a position taken by the optical axis of the right-eye lens fitted inside a frame, and extending along an up/down direction intersects a top end of the frame, and coordinate point at which the straight line intersects a bottom end of the frame,
with (xtL, ytL) and (xbL, ybL) respectively indicating a coordinate point at which a straight line passing through a position taken by the optical axis of the left-eye lens fitted inside a frame, and extending along an up/down direction intersects a top end of the frame and a coordinate point at which the straight line intersects a bottom end of the frame; and with angles θR and θL calculated as;

$$\theta R = atan((SAG1R(xtR, ytR) - SAG1R(xbR, ybR)) / (ytR - ybR))$$

and

$$\theta L = atan((SAG1L(xtL, ytL) - SAG1L(xbL, ybL)) / (ytL - ybL)).$$

10. The progressive power lens pair according to any one of claims 1 through 6, wherein:
a condition expressed in units of diopters as;

$$0 < |(ADDR1 - ADDR2) - (ADDL1 - ADDL2)| \le 4 \ldots (1)$$

is satisfied, when a condition expressed in units of millimeters as;

$$0 \le |(SAG1R(x, y) - SAG1L(x', y')| \le 4 \ldots (8)$$

is satisfied on a frame perimeter with respect to a sag quantity SAG1R(x, y) for the right-eye lens and a sag quantity SAG1L(x', y') for the left-eye lens;
with SAG1R(x, y) indicating a sag quantity measured along an optical axis in relation to the right-eye lens at a coordinate point (x, y) taken on a plane passing through an object-side vertex of the right-eye lens and ranging perpendicular to the optical axis of the right-eye lens,
with SAG1L(x, y) indicating a sag quantity measured along the optical axis in relation to the left-eye lens at a coordinate point (x, y) taken on a plane passing through an object-side vertex of the left-eye lens and ranging perpendicular to the optical axis of the left-eye lens; and
with (x', y') indicating a coordinate point taken at a position on a left-eye frame that achieves symmetry to the coordinate point (x, y) on a right-eye frame.

11. A computer-implemented method for designing a progressive power lens pair (10) with a left-eye lens (10L) and a right-eye lens (10R) each having a distance zone (D) suitable for distance vision, a near zone (N) located at a position different from a position of the distance zone and suited for near vision and a progressive zone (P) located between the distance zone and the near zone, where refractive power changes continuously, comprising steps of:

obtaining prescription information pertaining to a wearer; and
designing the progressive power lens pair so as to ensure that ADDR1 - ADDR2 and ADDL1 - ADDL2 take values different from each other,
with ADDR1 and ADDR2 respectively representing surface additional power at an object-side surface and surface additional power at an eyeball-side surface of the right-eye lens and ADDL1 and ADDL2 respectively representing surface additional power at an object-side surface and surface additional power at an eyeball-side surface of the left-eye lens, on condition that prescribed additional power for the right-eye lens and prescribed additional power for the left-eye lens are equal to each other in the progressive power lens pair; and prescription information for the progressive power lens pair indicates:
that power SVR along an up/down direction achieved at an optical center of the right-eye lens and power SVL along the up/down direction achieved at an optical center of the left-eye lens are different from each other, or
that spherical power SR at the right-eye lens and spherical power SL at the left-eye lens are different from each other,
that astigmatic power CR at the right-eye lens and astigmatic power CL at the left-eye lens are different from each other, or
that an astigmatism axis angle AxR corresponding to the right-eye lens and an astigmatism axis angle AxL corresponding to the left-eye lens are different from each other , wherein the spherical powers SR and SL, the astigmatic powers CR and CL and the astigmatic axis angles AxR and AxL correspond to the prescription values, wherein:

the progressive power lens pair is designed to satisfy a condition expressed as

$$ADDR1 < ADDL1,$$

when the spherical power SR at the right-eye lens is greater than the spherical power SL at the left-eye lens, the spherical equivalent SR + CR/2 for the right-eye lens is greater than the spherical equivalent SL + CL/2 for the left-eye lens, or power SVR along an up/down direction achieved at an optical center of the right-eye lens is greater than power SVL along an up/down direction achieved at an optical center of the left-eye lens; and
the progressive power lens pair is designed to satisfy a condition expressed as

$$ADDL1 < ADDR1,$$

when the spherical power SL at the left-eye lens is greater than the spherical power SR at the right-eye lens, the spherical equivalent SL + CL/2 for the left-eye lens is greater than the spherical equivalent SR + CR/2 for the right-eye lens, or power SVL along an up/down direction achieved at an optical center of the left-eye lens is greater than power SVR along an up/down direction achieved at an optical center of the right-eye lens,

$$SVR \text{ being defined by the expression } SR + CR \times (\sin(AxR))^{\wedge}2,$$

and

$$SVL \text{ being defined by the expression } SL + CL \times (\sin(AxL))^{\wedge}2.$$

**12.** The method for designing a progressive power lens pair according to claim 11, wherein:
a value calculated as (ADDR1 - ADDR2) - (ADDL1 - ADDL2) is set based upon sight-line information obtained through detection executed on a wearer wearing a reference progressive power lens pair assuming equal values for ADDR1 - ADDR2 and ADDL1- ADDL2.

**13.** The method for designing a progressive power lens pair according to claim 11 or claim 12, wherein:
a value calculated as (ADDR1 - ADDR2) - (ADDL1 - ADDL2) is set based upon an offset between a position at which an object can be viewed at a near reference point of the right-eye lens and a position at which the object can be viewed at a near reference point of the left-eye lens, detected on a wearer wearing a reference progressive power lens pair assuming equal values for ADDR1 - ADDR2 and ADDL1 - ADDL2.

**14.** A method for manufacturing a progressive power lens pair, comprising steps of:

designing the progressive power lens pair through the method for designing according to any one of claims 11 through 13; and
manufacturing the progressive power lens pair designed through the method for designing.

**Patentansprüche**

**1.** Gleitsichtlinsenpaar (1), umfassend eine Linse für das linke Auge (10L) und eine Linse für das rechte Auge (10R), die jeweils eine Fernzone (F), die für fernes Sehen geeignet ist, eine Nahzone (N), die an einer anderen Position als eine Position der Fernzone eingestellt ist und eine Brechkraft erreicht, die für nahes Sehen geeignet ist, und eine Gleitzone (P), die zwischen der Fernzone und der Nahzone liegt, wo sich Brechkraft kontinuierlich ändert, aufweisen, wobei:

eine objektseitige Oberfläche und eine augapfelseitige Oberfläche der Linse für das rechte Auge und eine objektseitige Oberfläche und eine augapfelseitige Oberfläche der Linse für das linke Auge eingestellt werden, indem sichergestellt wird, dass ADDR1 - ADDR2 und ADDL1 - ADDL2 Werte annehmen, die sich voneinander unterscheiden,

wobei ADDR1 und ADDR2 zusätzliche Oberflächenbrechkraft an der objektseitigen Oberfläche bzw. zusätzliche Oberflächenbrechkraft an der augapfelseitigen Oberfläche der Linse für das rechte Auge bereitstellen und wobei ADDL1 und ADDL2 zusätzliche Oberflächenbrechkraft an der objektseitigen Oberfläche bzw. zusätzliche Oberflächenbrechkraft an der augapfelseitigen Oberfläche der Linse für das linke Auge bereitstellen,

unter einer Bedingung, dass verschriebene zusätzliche Brechkraft für die Linse für das rechte Auge und verschriebene zusätzliche Brechkraft für die Linse für das linke Auge in dem Gleitsichtlinsenpaar gleich sind und Verschreibungsinformationen für das Gleitsichtlinsenpaar angeben, dass Brechkraft SVR entlang einer Auf-/Abwärtsrichtung, die bei einem optischen Mittelpunkt der Linse für das rechte Auge erreicht wird, und Brechkraft SVL entlang der Auf-/Abwärtsrichtung, die bei einem optischen Mittelpunkt der Linse für das linke Auge erreicht wird, sich voneinander unterscheiden, dass sphärische Brechkraft SR an der Linse für das rechte Auge und sphärische Brechkraft SL an der Linse für das linke Auge sich voneinander unterscheiden, dass astigmatische Brechkraft CR an der Linse für das rechte Auge und astigmatische Brechkraft CL an der Linse für das linke Auge sich voneinander unterscheiden oder dass ein Astigmatismusachsenwinkel AxR entsprechend der Linse für das rechte Auge und ein Astigmatismusachsenwinkel AxL entsprechend der Linse für das linke Auge sich voneinander unterscheiden, wobei die sphärischen Brechkräfte SR und SL, die astigmatischen Brechkräfte CR und CL und die astigmatischen Achsenwinkel A×R und A×L den Verschreibungswerten entsprechen;

das Gleitsichtlinsenpaar eine Bedingung erfüllt, angegeben als

$$ADDR1 < ADDL1,$$

wenn die sphärische Brechkraft SR an der Linse für das rechte Auge größer ist als die sphärische Brechkraft SL an der Linse für das linke Auge, das sphärische Äquivalent SR + CR/2 für die Linse für das rechte Auge größer ist als das sphärische Äquivalent SL + CL/2 für die Linse für das linke Auge oder Brechkraft SVR entlang einer Auf-/Abwärtsrichtung, die bei einem optischen Mittelpunkt der Linse für das rechte Auge erreicht wird, größer ist als Brechkraft SVL entlang einer Auf-/Abwärtsrichtung, die bei einem optischen Mittelpunkt der Linse für das linke Auge erreicht wird; und

das Gleitsichtlinsenpaar eine Bedingung erfüllt, angegeben als

$$ADDL1 < ADDR1,$$

wenn die sphärische Brechkraft SL an der Linse für das linke Auge größer ist als die sphärische Brechkraft SR an der Linse für das rechte Auge, das sphärische Äquivalent SL + CL/2 für die Linse für das linke Auge größer ist als das sphärische Äquivalent SR + CR/2 für die Linse für das rechte Auge oder Brechkraft SVL entlang einer Auf-/Abwärtsrichtung, die bei einem optischen Mittelpunkt der Linse für das linke Auge erreicht wird, größer ist als Brechkraft SVR entlang einer Auf-/Abwärtsrichtung, die bei einem optischen Mittelpunkt der Linse für das rechte Auge erreicht wird,

$$SVR \text{ durch den Ausdruck } SR + CR \times (\sin(A{\times}R))^2$$

definiert ist und

$$SVL \text{ durch den Ausdruck } SL + CL \times (\sin(A{\times}L))^2$$

definiert ist.

2. Gleitsichtlinsenpaar nach Anspruch 1, wobei:
   BCRf, das eine Fernzonenbasiskurve an der objektseitigen Oberfläche der Linse für das rechte Auge darstellt, und BCLf, das eine Fernzonenbasiskurve an der objektseitigen Oberfläche der Linse für das linke Auge darstellt, sich voneinander unterscheiden, wenn die sphärische Brechkraft SR an der Linse für das rechte Auge und eine sphärische Brechkraft SL an der linken Linse sich voneinander unterscheiden, oder ein sphärisches Äquivalent SR + CR/2 für die Linse für das rechte Auge und das sphärische Äquivalent SL + CL/2 für die Linse für das linke Auge sich voneinander unterscheiden.

3. Gleitsichtlinsenpaar nach Anspruch 1 oder 2, das eine Bedingung erfüllt, die in Dioptrieeinheiten angegeben ist als;

$$0 < |(ADDR1 - ADDR2) - (ADDL1 - ADDL2)| \leq 4 \ldots (1).$$

4. Gleitsichtlinsenpaar nach einem der Ansprüche 1 bis 3, das eine Bedingung erfüllt, die angegeben ist als;

$$0 < |(ADDR1 - ADDR2) - (ADDL1 - ADDL2)| / |SR\text{-}SL| \leq 16 \ldots (2)$$

wenn die sphärische Brechkraft SR an der Linse für das rechte Auge und die sphärische Brechkraft SL an der Linse für das linke Auge sich voneinander unterscheiden.

5. Gleitsichtlinsenpaar nach einem der Ansprüche 1 bis 3, das eine Bedingung erfüllt, die angegeben ist als;

$$0 < |(ADDR1 - ADDR2) - (ADDL1 - ADDL2)| / |(SR + CR/2) - (SL + CL/2)| \leq 32 \ldots (3)$$

wenn ein sphärisches Äquivalent SR + CR/2 für die Linse für das rechte Auge und ein sphärisches Äquivalent SL + CL/2 für die Linse für das linke Auge Werte annehmen, die sich voneinander unterscheiden.

6. Gleitsichtlinsenpaar nach einem der Ansprüche 1 bis 3, wobei:

SVR und SVL sich voneinander unterscheiden und
eine Bedingung, angegeben als

$$0 < |(ADDR1 - ADDR2) - (ADDL1 - ADDL2)| / |(SVR - SVL)| \leq 16 \ldots (4)$$

erfüllt ist.

7. Gleitsichtlinsenpaar nach einem der Ansprüche 1 bis 6, wobei:

eine Bedingung, die in Dioptrieeinheiten angegeben ist als

$$0 < |(ADDR1 - ADDR2) - (ADDL1 - ADDL2)| \leq 4 \ldots (1)$$

erfüllt ist, wenn eine Bedingung, die in Einheiten von Millimetern angegeben ist als

$$0 \leq |(SAG1R(xtR, ytR) - SAG1R(xbR, ybR)) - (SAG1L(xtL, ytL) - SAG1L(xbL, ybL))| \leq 4 \ldots (5)$$

erfüllt ist,
wobei SAG1R(x, y) eine Senkungsmenge angibt, die ein Ausmaß einer Senkung darstellt, gemessen entlang einer optischen Achse in Relation zu der Linse für das rechte Auge an einem Koordinatenpunkt (x, y), eingenommen auf einer Ebene, die durch einen objektseitigen Vertex der Linse für das rechte Auge geht und senkrecht zu der optischen Achse der Linse für das rechte Auge reicht,
wobei SAG1L(x, y) eine Senkungsmenge angibt, gemessen entlang einer optischen Achse in Relation zu der Linse für das linke Auge an einem Koordinatenpunkt (x, y), eingenommen auf einer Ebene, die durch einen objektseitigen Vertex der Linse für das linke Auge geht und senkrecht zu der optischen Achse der Linse für das linke Auge reicht,
wobei (xtR, ytR) und (xbR, ybR) einen Koordinatenpunkt, an dem eine gerade Linie, die durch eine Position geht, die von der optischen Achse der Linse für das rechte Auge, die in einen Rahmen eingesetzt ist, eingenommen wird und sich entlang einer Auf-/Abwärtsrichtung erstreckt, ein oberes Ende des Rahmens schneidet, bzw. einen Koordinatenpunkt, an dem die gerade Linie ein unteres Ende des Rahmens schneidet; und wobei (xtL, ytL) und (xbL, ybL) einen Koordinatenpunkt, an dem eine gerade Linie, die durch eine Position geht, die von der optischen Achse der Linse für das linke Auge, die in den Rahmen eingesetzt ist, eingenommen wird und sich entlang einer Auf-/Abwärtsrichtung erstreckt, ein oberes Ende des Rahmens schneidet, bzw. einen Koordinatenpunkt, an dem die gerade Linie das untere Ende des Rahmens schneidet, angeben.

**8.** Gleitsichtlinsenpaar nach einem der Ansprüche 1 bis 6, wobei:

eine Bedingung, die in Dioptrieeinheiten angegeben ist als

$$0 < |(ADDR1 - ADDR2) - (ADDL1 - ADDL2)| \leq 4 \,...\, (1)$$

erfüllt ist, wenn eine Bedingung, die in Einheiten von Millimetern angegeben ist als

$$0 \leq |SAG1R(xbR, ybR) - SAG1L(xbL, ybL)| \leq 4 \,...\, (6)$$

erfüllt ist,
wobei SAG1R(x, y) eine Senkungsmenge angibt, gemessen entlang einer optischen Achse in Relation zu der Linse für das rechte Auge an einem Koordinatenpunkt (x, y), eingenommen auf einer Ebene, die durch einen objektseitigen Vertex der Linse für das rechte Auge geht und senkrecht zu der optischen Achse der Linse für das rechte Auge reicht,
wobei SAG1L(x, y) eine Senkungsmenge angibt, gemessen entlang einer optischen Achse in Relation zu der Linse für das linke Auge an einem Koordinatenpunkt (x, y), eingenommen auf einer Ebene, die durch den objektseitigen Vertex der Linse für das linke Auge geht und senkrecht zu der optischen Achse der Linse für das linke Auge reicht,
wobei (xbR, ybR) einen Koordinatenpunkt angibt, an dem eine gerade Linie, die durch eine Position geht, die von der optischen Achse der Linse für das rechte Auge, die in einen Rahmen eingesetzt ist, eingenommen wird und sich entlang einer Auf-/Abwärtsrichtung erstreckt, ein unteres Ende des Rahmens schneidet; und
wobei (xbL, ybL) einen Koordinatenpunkt angibt, an dem eine gerade Linie, die durch eine Position geht, die von der optischen Achse der Linse für das linke Auge, die in einen Rahmen eingesetzt ist, eingenommen wird und sich entlang der Auf-/Abwärtsrichtung erstreckt, das untere Ende des Rahmens schneidet.

**9.** Gleitsichtlinsenpaar nach einem der Ansprüche 1 bis 6, wobei:

eine Bedingung, die in Dioptrieeinheiten angegeben ist als

$$0 < |(ADDR1 - ADDR2) - (ADDL1 - ADDL2)| \leq 4 \,...\, (1)$$

erfüllt ist, wenn eine Bedingung, die in Einheiten von Grad angegeben ist als

$$0 \leq |\theta R - \theta L| \leq 5 \,...\, (7)$$

erfüllt ist,
wobei SAG1R(x, y) eine Senkungsmenge angibt, gemessen entlang einer optischen Achse in Relation zu der Linse für das rechte Auge an einem Koordinatenpunkt (x, y), eingenommen auf einer Ebene, die durch einen objektseitigen Vertex der Linse für das rechte Auge geht und senkrecht zu einer optischen Achse der Linse für das rechte Auge reicht,
wobei SAG1L(x, y) eine Senkungsmenge angibt, gemessen entlang einer optischen Achse in Relation zu der Linse für das linke Auge an einem Koordinatenpunkt (x, y), eingenommen auf einer Ebene, die durch einen objektseitigen Vertex der Linse für das linke Auge geht und senkrecht zu der optischen Achse der Linse für das linke Auge reicht,
wobei (xtR, ytR) und (xbR, ybR) einen Koordinatenpunkt, an dem eine gerade Linie, die durch eine Position geht, die von der optischen Achse der Linse für das rechte Auge, die in einen Rahmen eingesetzt ist, eingenommen wird und sich entlang einer Auf-/Abwärtsrichtung erstreckt, ein oberes Ende des Rahmens schneidet, bzw. einen Koordinatenpunkt, an dem die gerade Linie ein unteres Ende des Rahmens schneidet, angeben; und wobei (xtL, ytL) und (xbL, ybL) einen Koordinatenpunkt, an dem eine gerade Linie, die durch eine Position geht, die von der optischen Achse der Linse für das linke Auge, die in einen Rahmen eingesetzt ist, eingenommen wird und sich entlang einer Auf-/Abwärtsrichtung erstreckt, ein oberes Ende des Rahmens schneidet, bzw. einen Koordinatenpunkt, an dem die gerade Linie ein unteres Ende des Rahmens schneidet, angeben; und wobei Winkel θR und θL berechnet sind als;

$$θR = atan((SAG1R(xtR, ytR) − SAG1R(xbR, ybR))/(ytR − ybR))$$

und

$$θL = atan((SAG1L(xtL, ytL) − SAG1L(xbL, ybL))/(ytL − ybL)).$$

10. Gleitsichtlinsenpaar nach einem der Ansprüche 1 bis 6, wobei:

eine Bedingung, die in Dioptrieeinheiten angegeben ist als

$$0 < |(ADDR1 − ADDR2) − (ADDL1 − ADDL2)| \leq 4 \dots (1)$$

erfüllt ist, wenn eine Bedingung, die in Einheiten von Millimetern angegeben ist als

$$0 \leq |(SAG1R(x, y) − SAG1L(x', y')| \leq 4 \dots (8)$$

auf einem Rahmenperimeter in Bezug auf eine Senkungsmenge SAG1R(x, y) für die Linse für das rechte Auge und eine Senkungsmenge SAG1L(x', y') für die Linse für das linke Auge erfüllt ist;
wobei SAG1R(x, y) eine Senkungsmenge angibt, gemessen entlang einer optischen Achse in Relation zu der Linse für das rechte Auge an einem Koordinatenpunkt (x, y), eingenommen auf einer Ebene, die durch einen objektseitigen Vertex der Linse für das rechte Auge geht und senkrecht zu der optischen Achse der Linse für das rechte Auge reicht,
wobei SAG1L(x, y) eine Senkungsmenge angibt, gemessen entlang der optischen Achse in Relation zu der Linse für das linke Auge an einem Koordinatenpunkt (x, y), eingenommen auf einer Ebene, die durch einen objektseitigen Vertex der Linse für das linke Auge geht und senkrecht zu der optischen Achse der Linse für das linke Auge reicht; und
wobei (x', y') einen Koordinatenpunkt, eingenommen an einer Position auf einem Rahmen für das linke Auge, angibt, der eine Symmetrie zu dem Koordinatenpunkt (x, y) auf einem Rahmen für das rechte Auge erreicht.

11. Computerimplementiertes Verfahren zum Gestalten eines Gleitsichtlinsenpaars (10) mit einer Linse für das linke Auge (10L) und einer Linse für das rechte Auge (10R), die jeweils eine Fernzone (D), die für fernes Sehen geeignet ist, eine Nahzone (N), die an einer anderen Position als eine Position der Fernzone liegt und für nahes Sehen geeignet ist, und eine Gleitzone (P), die zwischen der Fernzone und der Nahzone liegt, wo sich Brechkraft kontinuierlich ändert, aufweisen, umfassend Schritte zum:

Erhalten von Verschreibungsinformationen, die sich auf einen Träger beziehen; und
Gestalten des Gleitsichtlinsenpaars so, um sicherzustellen, dass ADDR1 - ADDR2 und ADDL1 - ADDL2 Werte annehmen, die sich voneinander unterscheiden,
wobei ADDR1 und ADDR2 zusätzliche Oberflächenbrechkraft an einer objektseitigen Oberfläche bzw. zusätzliche Oberflächenbrechkraft an einer augapfelseitigen Oberfläche der Linse für das rechte Auge bereitstellen und wobei ADDL1 und ADDL2 zusätzliche Oberflächenbrechkraft an einer objektseitigen Oberfläche bzw. zusätzliche Oberflächenbrechkraft an einer augapfelseitigen Oberfläche der Linse für das linke Auge bereitstellen, unter einer Bedingung, dass verschriebene zusätzliche Brechkraft für die Linse für das rechte Auge und verschriebene zusätzliche Brechkraft für die Linse für das linke Auge in dem Gleitsichtlinsenpaar gleich sind und Verschreibungsinformationen für das Gleitsichtlinsenpaar angeben:

dass Brechkraft SVR entlang einer Auf-/Abwärtsrichtung, die bei einem optischen Mittelpunkt der Linse für das rechte Auge erreicht wird, und Brechkraft SVL entlang der Auf-/Abwärtsrichtung, die bei einem optischen Mittelpunkt der Linse für das linke Auge erreicht wird, sich voneinander unterscheiden, oder
dass sphärische Brechkraft SR an der Linse für das rechte Auge und sphärische Brechkraft SL an der Linse für das linke Auge sich voneinander unterscheiden,
dass astigmatische Brechkraft CR an der Linse für das rechte Auge und astigmatische Brechkraft CL an der Linse für das linke Auge sich voneinander unterscheiden oder
dass ein Astigmatismusachsenwinkel AxR entsprechend der Linse für das rechte Auge und ein Astigmatismusachsenwinkel A×L entsprechend der Linse für das linke Auge sich voneinander unterscheiden, wobei die sphärischen Brechkräfte SR und SL, die astigmatischen Brechkräfte CR und CL und die astigmatischen Achsenwinkel A×R und A×L den Verschreibungswerten entsprechen, wobei:

das Gleitsichtlinsenpaar gestaltet ist, eine Bedingung zu erfüllen, angegeben als

$$ADDR1 < ADDL1,$$

wenn die sphärische Brechkraft SR an der Linse für das rechte Auge größer ist als die sphärische Brechkraft SL an der Linse für das linke Auge, das sphärische Äquivalent SR + CR/2 für die Linse für das rechte Auge größer ist als das sphärische Äquivalent SL + CL/2 für die Linse für das linke Auge oder Brechkraft SVR entlang einer Auf-/Abwärtsrichtung, die bei einem optischen Mittelpunkt der Linse für das rechte Auge erreicht wird, größer ist als Brechkraft SVL entlang einer Auf-/Abwärtsrichtung, die bei einem optischen Mittelpunkt der Linse für das linke Auge erreicht wird; und
das Gleitsichtlinsenpaar gestaltet ist, eine Bedingung zu erfüllen, angegeben als

$$ADDL1 < ADDR1,$$

wenn die sphärische Brechkraft SL an der Linse für das linke Auge größer ist als die sphärische Brechkraft SR an der Linse für das rechte Auge, das sphärische Äquivalent SL + CL/2 für die Linse für das linke Auge größer ist als das sphärische Äquivalent SR + CR/2 für die Linse für das rechte Auge oder Brechkraft SVL entlang einer Auf-/Abwärtsrichtung, die bei einem optischen Mittelpunkt der Linse für das linke Auge erreicht wird, größer ist als Brechkraft SVR entlang einer Auf-/Abwärtsrichtung, die bei einem optischen Mittelpunkt der Linse für das rechte Auge erreicht wird,

$$SVR \text{ durch den Ausdruck } SR + CR \times (\sin(A{\times}R))^2 \text{ definiert ist}$$

definiert ist und

$$SVL \text{ durch den Ausdruck } SL + CL \times (\sin(A{\times}L))^2$$

definiert ist.

12. Verfahren zum Gestalten eines Gleitsichtlinsenpaars nach Anspruch 11, wobei:
ein Wert, berechnet als (ADDR1 - ADDR2) - (ADDL1 - ADDL2), basierend auf Sichtlinieninformationen eingestellt ist, die durch Erfassen erhalten werden, das an einem Träger ausgeführt wird, der ein Referenzgleitsichtlinsenpaar trägt, unter der Annahme gleicher Werte für ADDR1 - ADDR2 und ADDL1 - ADDL2.

13. Verfahren zum Gestalten eines Gleitsichtlinsenpaars nach Anspruch 11 oder Anspruch 12, wobei:
ein Wert, berechnet als (ADDR1 - ADDR2) - (ADDL1 - ADDL2), basierend auf einem Versatz zwischen einer Position, an der ein Objekt bei einem nahen Referenzpunkt der Linse für das rechte Auge betrachtet werden kann, und einer Position, an der das Objekt an einem nahen Referenzpunkt der Linse für das linke Auge betrachtet werden kann, erfasst bei einem Träger, der ein Referenzgleitsichtlinienpaar trägt, unter der Annahme gleicher Werte für ADDR1 - ADDR2 und ADDL1 - ADDL2.

**14.** Verfahren zur Herstellung eines Gleitsichtlinienpaars, umfassend Schritte zum:

Gestalten des Gleitsichtlinienpaars durch das Verfahren zum Gestalten nach einem der Ansprüche 11 bis 13 und Herstellen des Gleitsichtlinienpaars, das durch das Verfahren zum Gestalten gestaltet wurde.

**Revendications**

**1.** Paire de verres à pouvoir progressif (1), comprenant un verre d'œil gauche (10L) et un verre d'œil droit (10R) ayant chacun une zone de distance (F) convenant à une vision à distance, une zone de proximité (N) réglée dans une position différente d'une position de la zone de distance et offrant un pouvoir réfringent convenant à une vision proche et une zone progressive (P) située entre la zone de distance et la zone proche, où le pouvoir réfringent change en continu, dans laquelle :

une surface côté objet et une surface côté globe oculaire du verre d'œil droit et une surface côté objet et une surface côté globe oculaire du verre d'œil gauche sont réglées en s'assurant que ADDR1 - ADDR2 et ADDL1 - ADDL2 prennent des valeurs différentes l'une de l'autre,
ADDR1 et ADDR2 représentant respectivement un pouvoir supplémentaire de surface à la surface côté objet et un pouvoir supplémentaire de surface à la surface côté globe oculaire du verre d'œil droit, et
ADDL1 et ADDL2 représentant respectivement un pouvoir supplémentaire de surface à la surface côté objet et un pouvoir supplémentaire de surface à la surface côté globe oculaire du verre d'œil gauche,
à condition que le pouvoir supplémentaire prescrit pour le verre d'œil droit et le pouvoir supplémentaire prescrit pour le verre d'œil gauche soient égaux l'un à l'autre dans la paire de verres à pouvoir progressif et que les informations de prescription pour la paire de verres à pouvoir progressif indiquent que le pouvoir SVR le long d'un sens ascendant/descendant atteint à un centre optique du verre d'œil droit et le pouvoir SVL le long du sens ascendant/descendant atteint à un centre optique du verre d'œil gauche sont différents l'un de l'autre, que le pouvoir sphérique SR au verre d'œil droit et le pouvoir sphérique SL au verre d'œil gauche sont différents l'un de l'autre, que le pouvoir astigmatique CR au verre d'œil droit et le pouvoir astigmatique CL au verre d'œil gauche sont différents l'un de l'autre ou qu'un angle d'axe d'astigmatisme AxR correspondant au verre d'œil droit et un angle d'axe d'astigmatisme AxL correspondant au verre d'œil gauche sont différents l'un de l'autre, dans laquelle les pouvoirs sphériques SR et SL, les pouvoirs astigmatiques CR et CL et les angles d'axe astigmatique AxR et AxL correspondent aux valeurs de prescription ;
la paire de verres à pouvoir progressif satisfait à une condition exprimée par :

$$ADDR1 < ADDL1,$$

lorsque le pouvoir sphérique SR au verre d'œil droit est supérieur au pouvoir sphérique SL au verre d'œil gauche, l'équivalent sphérique SR + CR/2 pour le verre d'œil droit est supérieur à l'équivalent sphérique SL + CL/2 pour le verre d'œil gauche ou le pouvoir SVR le long d'un sens ascendant/descendant atteint à un centre optique du verre d'œil droit est supérieur au pouvoir SVL le long d'un sens ascendant/descendant atteint à un centre optique du verre d'œil gauche ; et
la paire de verres à pouvoir progressif satisfait à une condition exprimée par :

$$ADDL1 < ADDR1,$$

lorsque le pouvoir sphérique SL au verre d'œil gauche est supérieur au pouvoir sphérique SR au verre d'œil droit, l'équivalent sphérique SL + CL/2 pour le verre d'œil gauche est supérieur à l'équivalent sphérique SR + CR/2 pour le verre d'œil droit ou le pouvoir SVL le long d'un sens ascendant/descendant atteint à un centre optique du verre d'œil gauche est supérieur au pouvoir SVR le long d'un sens ascendant/descendant atteint à un centre optique du verre d'œil droit,

$$SVR \text{ étant défini par l'expression } SR + CR \times (\sin(AxR))^2$$

et

SVL étant défini par l'expression SL + CL x (sin(AxL))^2.

2. Paire de verres à pouvoir progressif selon la revendication 1, dans laquelle :
BCRf représentant une courbe de base de zone de distance à la surface côté objet du verre d'œil droit et BCLf représentant une courbe de base de zone de distance à la surface côté objet du verre d'œil gauche sont différents l'un de l'autre lorsque le pouvoir sphérique SR au verre d'œil droit et un pouvoir sphérique SL au verre gauche sont différents l'un de l'autre ou un équivalent sphérique SR + CR/2 pour le verre d'œil droit et l'équivalent sphérique SL + CL/2 pour le verre d'œil gauche sont différents l'un de l'autre.

3. Paire de verres à pouvoir progressif selon la revendication 1 ou 2 qui satisfait à une condition exprimée en unités de dioptries par :

$$0 < |(ADDR1 - ADDR2) - (ADDL1 - ADDL2)| \leq 4 \dots (1).$$

4. Paire de verres à pouvoir progressif selon l'une quelconque des revendications 1 à 3, qui satisfait à une condition exprimée par :

$$0 < |(ADDR1 - ADDR2) - (ADDL1 - ADDL2)| \, / \, |SR - SL| \leq 16 \dots (2)$$

lorsque le pouvoir sphérique SR au verre d'œil droit et le pouvoir sphérique SL au verre d'œil gauche sont différents l'un de l'autre.

5. Paire de verres à pouvoir progressif selon l'une quelconque des revendications 1 à 3, qui satisfait à une condition exprimée par :

$$0 < |(ADDR1 - ADDR2) - (ADDL1 - ADDL2)| \, / \, |SR + CR/2) - (SL + CL/2)| \leq 32 \dots (3)$$

lorsqu'un équivalent sphérique SR + CR/2 pour le verre d'œil droit et un équivalent sphérique SL + CL/2 pour le verre d'œil gauche prennent des valeurs différentes l'une de l'autre.

6. Paire de verres à pouvoir progressif selon l'une quelconque des revendications 1 à 3, dans laquelle :

SVR et SVL sont différents l'un de l'autre ; et
une condition exprimée par :

$$0 < |(ADDR1 - ADDR2) - (ADDL1 - ADDL2)| \, / \, |(SVR - SVL)| \leq 16 \dots (4)$$

est satisfaite.

7. Paire de verres à pouvoir progressif selon l'une quelconque des revendications 1 à 6, dans laquelle :

une condition exprimée en unités de dioptries par :

$$0 < |(ADDR1 - ADDR2) - (ADDL1 - ADDL2)| \leq 4 \dots (1)$$

est satisfaite lorsqu'une condition exprimée en unités de millimètres par :

$$0 \leq | (SAG1R(xtR, ytR) - SAG1R(xbR, ybR)) - (SAG1L(xtL, ytL) - SAG1L(xbL, ybL)) \leq 4 \dots (5)$$

est satisfaite,

SAG1R(x, y) indiquant une quantité de sécurité représentant une marge de sécurité mesurée le long d'un axe optique par rapport au verre d'œil droit en un point de coordonnées (x, y) pris sur un plan passant par un sommet côté objet du verre d'œil droit et s'étendant perpendiculairement à l'axe optique du verre d'œil droit,

SAG1L(x, y) indiquant une quantité de sécurité mesurée le long d'un axe optique par rapport au verre d'œil gauche en un point de coordonnées (x, y) pris sur un plan passant par un sommet côté objet du verre d'œil gauche et s'étendant perpendiculairement à l'axe optique du verre d'œil gauche,

(xtR, ytR) et (xbR, ybR) indiquant respectivement un point de coordonnées par lequel une ligne droite passant à travers une position prise par l'axe optique du verre d'œil droit ajusté à l'intérieur d'un châssis et s'étendant le long d'un sens ascendant/descendant coupe une extrémité supérieure du châssis et un point de coordonnées par lequel la ligne droite coupe une extrémité inférieure du châssis ; et

(xtL, ytL) et (xbL, ybL) indiquant respectivement un point de coordonnées par lequel une ligne droite passant à travers une position prise par l'axe optique du verre d'œil gauche ajusté à l'intérieur du châssis et s'étendant le long d'un sens ascendant/descendant coupe une extrémité supérieure du châssis et un point de coordonnées par lequel la ligne droite coupe l'extrémité inférieure du châssis.

8. Paire de verres à pouvoir progressif selon l'une quelconque des revendications 1 à 6, dans laquelle :

une condition exprimée en unités de dioptries par :

$$0 < |(ADDR1 - ADDR2) - (ADDL1 - ADDL2)| \leq 4 \dots (1)$$

est satisfaite lorsqu'une condition exprimée en unités de millimètres par :

$$0 \leq | SAG1R(xbR, ybR) - SAG1L(xbL, ybL) | \leq 4 \dots (6)$$

est satisfaite,

SAG1R(x, y) indiquant une quantité de sécurité mesurée le long d'un axe optique par rapport au verre d'œil droit en un point de coordonnées (x, y) pris sur un plan passant par un sommet côté objet du verre d'œil droit et s'étendant perpendiculairement à l'axe optique du verre d'œil droit,

SAG1L(x, y) indiquant une quantité de sécurité mesurée le long d'un axe optique par rapport au verre d'œil gauche en un point de coordonnées (x, y) pris sur un plan passant par un sommet côté objet du verre d'œil gauche et s'étendant perpendiculairement à l'axe optique du verre d'œil gauche,

(xbR, ybR) indiquant un point de coordonnées par lequel une ligne droite passant à travers une position prise par l'axe optique du verre d'œil droit ajusté à l'intérieur d'un châssis et s'étendant le long d'un sens ascendant/descendant coupe une extrémité inférieure du châssis ; et

(xbL, ybL) indiquant un point de coordonnées par lequel une ligne droite passant à travers une position prise par l'axe optique du verre d'œil gauche ajusté à l'intérieur d'un châssis et s'étendant le long du sens ascendant/descendant coupe l'extrémité inférieure du châssis.

9. Paire de verres à pouvoir progressif selon l'une quelconque des revendications 1 à 6, dans laquelle :

une condition exprimée en unités de dioptries par :

$$0 < |(ADDR1 - ADDR2) - (ADDL1 - ADDL2)| \leq 4 \dots (1)$$

est satisfaite lorsqu'une condition exprimée en unités de degrés par :

$$0 \leq | \theta R - \theta L| \leq 5 \dots (7)$$

est satisfaite,

SAG1R(x, y) indiquant une quantité de sécurité mesurée le long d'un axe optique par rapport au verre d'œil droit en un point de coordonnées (x, y) pris sur un plan passant par un sommet côté objet du verre d'œil droit et s'étendant perpendiculairement à l'axe optique du verre d'œil droit,

SAG1L(x, y) indiquant une quantité de sécurité mesurée le long d'un axe optique par rapport au verre d'œil gauche en un point de coordonnées (x, y) pris sur un plan passant par un sommet côté objet du verre d'œil gauche et s'étendant perpendiculairement à l'axe optique du verre d'œil gauche,

(xtR, ytR) et (xbR, ybR) indiquant respectivement un point de coordonnées par lequel une ligne droite passant à travers une position prise par l'axe optique du verre d'œil droit ajusté à l'intérieur d'un châssis et s'étendant le long d'un sens ascendant/descendant coupe une extrémité supérieure du châssis et un point de coordonnées par lequel la ligne droite coupe une extrémité inférieure du châssis ; et

(xtL, ytL) et (xbL, ybL) indiquant respectivement un point de coordonnées par lequel une ligne droite passant à travers une position prise par l'axe optique du verre d'œil gauche ajusté à l'intérieur d'un châssis et s'étendant le long d'un sens ascendant/descendant coupe une extrémité supérieure du châssis et un point de coordonnées par lequel la ligne droite coupe une extrémité inférieure du châssis ; et

les angles θP et θL étant calculés comme suit :

$$\theta R = atan((SAG1R(xtR, ytR) - SAG1R(xbR, ybR)) / (ytR - ybR))$$

et

$$\theta L = atan((SAG1L(xtL, ytL) - SAG1L(xbL, ybL)) / (ytL - ybL)).$$

10. Paire de verres à pouvoir progressif selon l'une quelconque des revendications 1 à 6, dans laquelle :

une condition exprimée en unités de dioptries par :

$$0 < |(ADDR1 - ADDR2) - (ADDL1 - ADDL2)| \leq 4 \ ... \ (1)$$

est satisfaite lorsqu'une condition exprimée en unités de millimètres par :

$$0 \leq | (SAG1R(x, y) - SAG1L(x', y') | \leq 4 \ ... \ (8)$$

est satisfaite sur un périmètre de châssis par rapport à une quantité de sécurité SAG1R(x, y) pour le verre d'œil droit et une quantité de sécurité SAG1L(x', y') pour le verre d'œil gauche ;

SAG1R(x, y) indiquant une quantité de sécurité mesurée le long d'un axe optique par rapport au verre d'œil droit en un point de coordonnées (x, y) pris sur un plan passant par un sommet côté objet du verre d'œil droit et s'étendant perpendiculairement à l'axe optique du verre d'œil droit,

SAG1L(x, y) indiquant une quantité de sécurité mesurée le long d'un axe optique par rapport au verre d'œil gauche en un point de coordonnées (x, y) pris sur un plan passant par un sommet côté objet du verre d'œil gauche et s'étendant perpendiculairement à l'axe optique du verre d'œil gauche ; et

(x', y') indiquant un point de coordonnées pris dans une position sur le châssis d'œil gauche qui assure une symétrie au point de coordonnées (x, y) sur un châssis d'œil droit.

11. Procédé mis en œuvre par ordinateur pour élaborer une paire de verres à pouvoir progressif (10) avec un verre d'œil gauche (10L) et un verre d'œil droit (10R) ayant chacun une zone de distance (D) convenant à une vision à distance, une zone de proximité (N) située dans une position différente d'une position de la zone de distance et convenant à une vision proche et une zone progressive (P) située entre la zone de distance et la zone proche, où un pouvoir réfringent change en continu, comprenant les étapes consistant à :

obtenir des informations de prescription appartenant à un utilisateur ; et
élaborer la paire de verres à pouvoir progressif en sorte de s'assurer que les expressions ADDR1 - ADDR2 et ADDL1 - ADDL2 prennent des valeurs différentes l'une de l'autre,

ADDR1 et ADDR2 représentant respectivement un pouvoir supplémentaire de surface à une surface côté objet et un pouvoir supplémentaire de surface à une surface côté globe oculaire du verre d'œil droit, et
ADDL1 et ADDL2 représentant respectivement un pouvoir supplémentaire de surface à une surface côté objet et un pouvoir supplémentaire de surface à la surface côté globe oculaire du verre d'œil gauche,
à condition que le pouvoir supplémentaire prescrit pour le verre d'œil droit et le pouvoir supplémentaire prescrit pour le verre d'œil gauche soient égaux l'un à l'autre dans la paire de verres à pouvoir progressif et que les informations de prescription pour la paire de verres à pouvoir progressif indiquent :

que le pouvoir SVR le long d'un sens ascendant/descendant atteint à un centre optique du verre d'œil droit et le pouvoir SVL le long du sens ascendant/descendant atteint à un centre optique du verre d'œil gauche sont différents l'un de l'autre, ou
que le pouvoir sphérique SR au verre d'œil droit et le pouvoir sphérique SL au verre d'œil gauche sont différents l'un de l'autre,
que le pouvoir astigmatique CR au verre d'œil droit et le pouvoir astigmatique CL au verre d'œil gauche sont différents l'un de l'autre, ou
qu'un angle d'axe d'astigmatisme AxR correspondant au verre d'œil droit et un angle d'axe d'astigmatisme AxL correspondant au verre d'œil gauche sont différents l'un de l'autre,
dans lequel les pouvoirs sphériques SR et SL, les pouvoirs astigmatiques CR et CL et les angles d'axe astigmatique AxR et AxL correspondent aux valeurs de prescription, dans lequel :

la paire de verres à pouvoir progressif est conçue pour satisfaire à une condition exprimée par :

$$ADDR1 < ADDL1,$$

lorsque le pouvoir sphérique SR au verre d'œil droit est supérieur au pouvoir sphérique SL au verre d'œil gauche, l'équivalent sphérique SR + CR/2 pour le verre d'œil droit est supérieur à l'équivalent sphérique SL + CL/2 pour le verre d'œil gauche ou le pouvoir SVR le long d'un sens ascendant/descendant atteint à un centre optique du verre d'œil droit est supérieur au pouvoir SVL le long d'un sens ascendant/descendant atteint à un centre optique du verre d'œil gauche ; et
la paire de verres à pouvoir progressif est conçue pour satisfaire à une condition exprimée par :

$$ADDL1 < ADDR1,$$

lorsque le pouvoir sphérique SL au verre d'œil gauche est supérieur au pouvoir sphérique SR au verre d'œil droit, l'équivalent sphérique SL + CL/2 pour le verre d'œil gauche est supérieur à l'équivalent sphérique SR + CR/2 pour le verre d'œil droit ou le pouvoir SVL le long d'un sens ascendant/descendant atteint à un centre optique du verre d'œil gauche est supérieur au pouvoir SVR le long d'un sens ascendant/descendant atteint à un centre optique du verre d'œil droit,

SVR étant défini par l'expression $SR + CR \times (\sin(AxR))^2$

et

SVL étant défini par l'expression $SL + CL \times (\sin(AxL))^2$.

12. Procédé d'élaboration d'une paire de verres à pouvoir progressif selon la revendication 11, dans lequel :
une valeur calculée par (ADDR1- ADDR2) - (ADDL1- ADDL2) est basée sur des informations de ligne de visée obtenues par détection exécutée sur un utilisateur portant une paire de verres à pouvoir progressif de référence supposant des valeurs égales de ADDR1 - ADDR2 et de ADDL1 - ADDL2.

13. Procédé d'élaboration d'une paire de verres à pouvoir progressif selon la revendication 11 ou la revendication 12, dans lequel :
une valeur calculée par (ADDR1 - ADDR2) - (ADDL1 - ADDL2) est réglée sur la base d'un décalage entre une position où un objet peut être observé en un point de référence proche du verre d'œil droit et une position où l'objet peut être observé en un point de référence proche du verre d'œil gauche, détecté sur un utilisateur portant une paire de verres à pouvoir progressif de référence supposant des valeurs égales de ADDR1 - ADDR2 et de ADDL1 - ADDL2.

14. Procédé de fabrication d'une paire de verres à pouvoir progressif, comprenant les étapes consistant à :

élaborer la paire de verres à pouvoir progressif par le procédé d'élaboration selon l'une quelconque des revendications 11 à 13 ; et
fabriquer la paire de verres à pouvoir progressif élaborée par le procédé d'élaboration.

# FIG.1

（a）

10
{ 10R    10L }

1

F

P

N

（b）

10, 10R

FV

F

L (L1)

12

11,
11R

DR

θ insR

L (L2)

P

N

EAR SIDE

NOSE SIDE

Y

X

Z

NV

A

# FIG.2

VD

20

21

10

Y
Z
X

# FIG.3

# FIG.4

TR (xtR, ytR)

TL (xtL, ytL)

11R

11L

10R

10L

BR (xbR, ybR)

BL (xbL, ybL)

1

EP 3 534 203 B1

# FIG.5

10R

Y

Z ← X

θR

# FIG.6

EP 3 534 203 B1

FIG.7

# FIG.8

```
START
```

S1001

OBTAIN PRESCRIPTION VALUES FOR WEARER

S1003

PRESCRIBED ADDITIONAL POWER FOR RIGHT-EYE LENS AND PRESCRIBED ADDITIONAL POWER FOR LEFT-EYE LENS EQUAL TO EACH OTHER?

NO

YES

S1005

SVR AND SVL, CALCULATED BASED UPON PRESCRIPTION INFORMATION FOR RIGHT-EYE LENS AND INFORMATION FOR LEFT-EYE LENS DIFFERENT FROM EACH OTHER, OR PRESCRIPTION INFORMATION FOR RIGHT-EYE LENS AND LEFT-EYE LENS INDICATE THAT DIFFERENT VALUES ARE TAKEN FOR RIGHT-EYE LENS AND LEFT-EYE LENS WITH RESPECT TO AT LEAST ONE OF; SPHERICAL POWER, ASTIGMATIC POWER AND ASTIGMATISM AXIS ANGLE?

NO

YES

S1007

SET DESIGN PARAMETERS BY SETTING ADDITION ALLOCATION PARAMETER (ADDR1 - ADDR2) FOR RIGHT-EYE LENS AND ADDITION ALLOCATION PARAMETER (ADDL1 - ADDR2) FOR LEFT-EYE LENS DIFFERENT FROM EACH OTHER

S1009

SET DESIGN PARAMETERS BY SETTING EQUAL VALUES FOR ADDITION ALLOCATION PARAMETER (ADDR1 - ADDR2) FOR RIGHT-EYE LENS AND ADDITION ALLOCATION PARAMETER (ADDL1 - ADDR2) FOR LEFT-EYE LENS

S1011

DESIGN PROGRESSIVE POWER LENS PAIR BASED UPON DESIGN PARAMETERS

S1013

MANUFACTURE PROGRESSIVE POWER LENS PAIR HAVING BEEN DESIGNED

```
END
```

# FIG.9

(a)

Y

40L    40R

(b)

41

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012215640 A
- EP 2937728 A1
- EP 2224276 A1
- EP 2669732 A1
- EP 2045649 A1
- WO 2011085936 A1
- JP 2010096852 A
- WO 2009072528 A1
- JP 2006267163 A
- WO 2015150432 A1
- WO 2014046206 A